# EUROPEAN PATENT SPECIFICATION

(11) **EP 4 398 554 B1**
(45) Date of publication and mention of the grant of the patent: **08.04.2026**
(21) Application number: 22871947.2
(22) Date of filing: 20.09.2022
(51) Int. Cl.: H04L 69/06, H04L 67/01, H04L 65/60, H04L 67/141, H04L 69/14, H04L 69/164, H04L 65/40

(54) **DATA TRANSMISSION METHOD, AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 27.09.2021 CN 202111138431
(43) Date of publication of application: 10.07.2024
(60) Divisional application: 25206824.2
(73) Proprietor: Huawei Technologies Co., Ltd., Shenzhen, Guangdong 518129 (CN)
(72) Inventor: HE, Jian, Shenzhen, Guangdong 518129 (CN); WANG, Fanzhao, Shenzhen, Guangdong 518129 (CN); KANG, Jiao, Shenzhen, Guangdong 518129 (CN); TANG, Lingling, Shenzhen, Guangdong 518129 (CN); ZHENG, Kai, Shenzhen, Guangdong 518129 (CN)
(74) Representative: Pfenning, Meinig & Partner mbB
(86) International application number: PCT/CN2022/119792
(87) International publication number: WO 2023/045901

(56) References cited:
- WO-A1-2018/112796
- WO-A1-2021/084326
- WO-A1-2021/174884
- US-A1- 2019 116 535
- US-A1- 2020 120 015
- US-A1- 2020 120 015
- US-A1- 2021 135 944

## Description

### TECHNICAL FIELD

This application relates to the field of data transmission, and in particular, to a data transmission method and a device.

### BACKGROUND

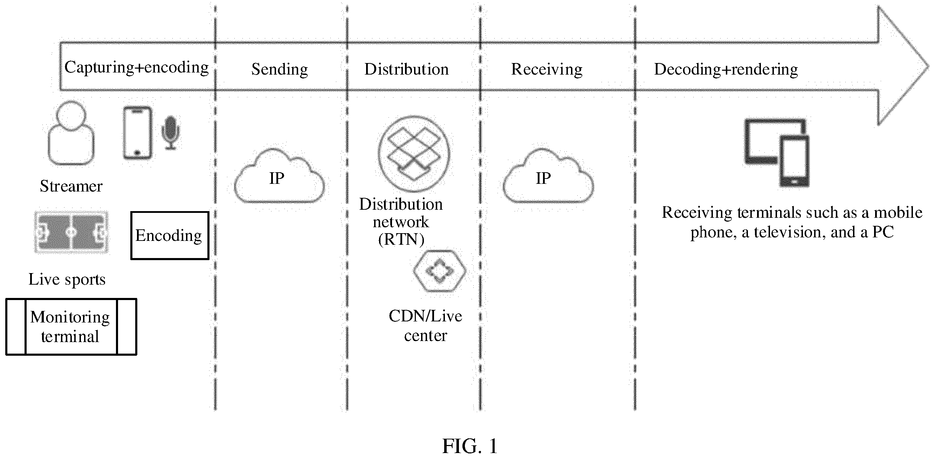

With the development of the Internet ecosystem, applications related to audio and video sessions become increasingly more popular. To ensure smooth user experience during sessions, the related applications attempt to optimize phases of a call process. Currently, a typical audio and video call includes several parts: capturing+encoding, sending, distribution, receiving, and decoding+rendering. Details are shown in FIG. 1. A delay and definition are key indicators of user experience of the audio and video session. In the current audio and video call, a sender endpiont captures an image by using a front-end device, encodes the image, splits the image into segments of continuous images, and transmits the segments of continuous images to a receiver endpoint by using a network. The receiver endpoint performs decoding and rendering, and displays the continuous images. Specifically, in the encoding, the captured continuous images are segmented in a fixed mode, and are segmented into data blocks. For example, in typical video encoding, segmentation is performed at a granularity of a group of pictures (GOP). One GOP includes one key frame (I-frame) and a plurality of reference frames (for example, a P-frame and a B-frame). The I-frame is an independent frame with all information, and can be decoded independently without referring to another frame to generate a static image. The P-frame indicates a difference between a current-frame image and a previous-frame image. The B-frame records a difference between a current frame and a previous frame, and a difference between the current frame and a next frame. Therefore, during transmission, the I-frame arriving first needs to be ensured, so that the subsequent P-frame and B-frame are meaningful. In addition, each GOP corresponds to a specific time period. In network transmission, when a GOP does not arrive in time, the GOP is skipped and a latest GOP is played to ensure user experience.

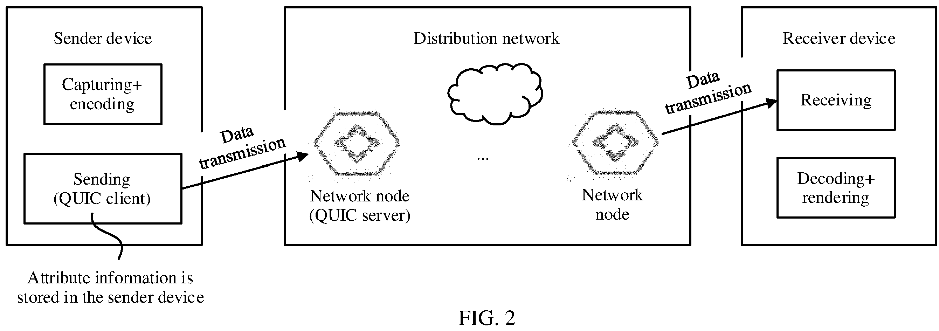

It can be learned from the foregoing audio and video session data transmission mode that, in audio and video session data transmission, to-be-sent data is at a granularity of data blocks, and different data blocks have different values (for example, audio data is more valuable than video data, and the I-frame is more critical than another frame). In addition, the data block is time-effective. If a specific time period is exceeded, effect, of improving user experience, brought by the data block is reduced (for example, if sending duration of the I-frame and the P-frame exceeds specific duration, a viewing user may prefer to watch a latest image), or the like. These may be referred to as attribute information such as a priority, reliability, and a deadline, of the data block. In view of this, optimization logic of an existing solution is as follows: A sender endpoint obtains actual attribute information of a to-be-sent target data block, where the attribute information is stored in the sender endpoint. The sender endpoint performs transmission scheduling and resource allocation on a to-be-transmitted target data stream based on the attribute information. For example, when bandwidth resources are insufficient, more bandwidth resources may be allocated to a data block with a higher priority; or when detecting that transmission of a data block expires, the sender endpoint actively discards the data block. After receiving a data block, a nearest network node (which may also be referred to as an edge node) of a distribution network "identifies" attribute information of the data block, and sends the data block to a next-hop node (an execution process of the next hop is similar) according to a preset sending policy (the sending policy is also determined based on the attribute information), until each data block is sent to the receiver endpoint . For details, refer to FIG. 2.

However, the "identification" process of the nearest network node is a prediction process, and the attribute information obtained through "identification" is not equivalent to actual attribute information of the data block at the sender endpoint. An error may occur in the prediction. In addition, sending policies of network nodes in an intermediate phase are also determined based on the attribute information of the data block. As a result, an error also occurs in the sending policy executed in the intermediate phase, and user experience is degraded.

US 2020/120015 describes a method which involves associating a connection identifier to multiple paths by using a gateway. The gateway is used to receive data packet from a communicating device. Messages are transmitted to the gateway by the communicating device. Traffic distribution policy is provided with traffic distribution rules between different networks, where the message contains list of the paths of the gateway.

### SUMMARY

Embodiments of this application provide a data transmission method and a device. In the method, protocol extension is performed on an existing quick UDP Internet connections (QUIC) protocol to obtain a first extended frame, and respective attribute information of different streams is transferred by using the first extended frame. By default, data blocks (one stream may include a plurality of data blocks) transferred in a same stream have same attribute information, namely, attribute information of the stream. In this way, attribute information obtained by a network node of a distribution network is the actual attribute information of the data block, so that the attribute information of the data block can be transferred in the entire distribution network rather than only on a sender endpoint. Therefore, in an intermediate transmission phase, a sending policy executed by the network node of the distribution network based on the attribute information is more reliable. This implements corresponding reliable data transmission and delay assurance, and finally improves user experience.

In view of this, embodiments of this application provide the following technical solutions.

According to a first aspect, an embodiment of this application first provides a data transmission method, which may be used in the field of real-time audio and video propagation. The method includes: First, a sender endpiont establishes a QUIC connection to a first network node of a distribution network. After establishing the QUIC connection to the first network node of the distribution network, the sender endpiont constructs n streams for a to-be-sent target data stream on the sender endpiont. For example, the sender endpiont may use an application programming interface (API) provided by a QUIC client to construct the n streams (For ease of description, in the following embodiments and descriptions of this application, an example in which the sender endpiont constructs the stream through the API provided by the QUIC client is used for description. Details are not described below again), where n≥1, and a value of n may be user-defined. In other words, a quantity of streams into which the to-be-sent target data stream is divided may be user-defined based on a requirement. If n=1, it indicates that the sender endpiont constructes one stream. In this case, the sender endpiont directly sends the entire target data stream as one stream. If n≥2, it indicates that the sender endpiont constructes a plurality of streams. In this case, the to-be-sent target data stream on the sender endpiont needs to be split into the n streams, and each stream is separately sent. After constructing the n streams for the to-be-sent target data stream, the sender endpiont further defines attribute information for each of the n streams to obtain n groups of attribute information (which may be referred to as first attribute information), where one group of first attribute information corresponds to one stream. For example, it is assumed that the sender endpiont constructes four streams through the API. Correspondingly, four groups of first attribute information need to be defined, and one stream has one group of first attribute information. It should be noted herein that each group of first attribute information includes at least one piece of attribute information. After defining the attribute information of each stream to obtain the n groups of first attribute information, the sender endpiont further sends the n groups of first attribute information to the first network node, so that the first network node transfers the received n groups of first attribute information to a next-hop node. It should be noted herein that the sender endpiont sends the first attribute information to the first network node is implemented by using a pre-defined extended frame (which may be referred to as a first extended frame), and the first extended frame is a frame obtained by performing protocol extension on a QUIC-compliant frame. After determining a first sending policy based on the n groups of first attribute information, the sender endpiont sends the n streams to the first network node according to the first sending policy, for example, may send the n streams to a QUIC server of the first network node according to the first sending policy (For ease of description, in the following embodiments and descriptions of this application, an example in which the n streams are sent to the QUIC server of the first network node is used for description. Details are not described below again). It should be further noted herein that an operation of sending the n streams by the sender endpiont according to the first sending policy and an operation of sending the n groups of attribute information by using the first extended frame are not subject to a specific execution sequence.

In the foregoing implementations of this application, protocol extension is performed on the existing QUIC protocol to obtain the first extended frame, and respective attribute information of different streams is transferred by using the first extended frame. By default, data blocks (one stream may include a plurality of data blocks) transferred in a same stream have same attribute information, namely, attribute information of the stream. In this way, attribute information obtained by a network node of the distribution network is the actual attribute information of the data block. This resolves a problem in which the attribute information of the data block cannot be transferred in the entire distribution network. Therefore, in an intermediate transmission phase, a sending policy executed by the network node of the distribution network based on the attribute information is more reliable. This implements corresponding reliable data transmission and delay assurance, and finally improves user experience.

In a possible implementation of the first aspect, before that the sender endpiont sends the n streams to the first network node according to the first sending policy, the method may further include the following operations: The sender endpiont defines attribute information for each of m data blocks (the m data blocks are data blocks included in a first stream) corresponding to the first stream (the first stream is any one of the n streams) to obtain m groups of attribute information (which may be referred to as second attribute information), and determines a sending policy (which may be referred to as a second sending policy) of the m data blocks based on the m groups of second attribute information. Each group of second attribute information includes at least one piece of attribute information, and m≥1. For ease of understanding, an example is used below. It is assumed that the sender endpiont constructes three streams through the API: a stream 1, a stream 2, and a stream 3. In addition to correspondingly defining three groups of first attribute information (one stream has one group of first attribute information), attribute information may be further defined for a data block included in each stream. It is assumed that the stream 1 includes m1 data blocks, the stream 2 includes m2 data blocks, and the stream 3 includes m3 data blocks. Attribute information may be defined for the data blocks included in each stream. In this case, m1 groups of second attribute information may be obtained for the stream 1, m2 groups of second attribute information may be obtained for the stream 2, and m3 groups of second attribute information may be obtained for the stream 3. After obtaining the m groups of second attribute information, the sender endpiont further transfers the m groups of second attribute information to the first network node. It should be noted herein that the sender endpiont sends the second attribute information to the first network node is implemented by using a pre-defined extended frame (which may be referred to as a second extended frame), and the second extended frame is a frame obtained by performing protocol extension on the QUIC protocol. In addition, after determining the second sending policy based on the m groups of second attribute information, the sender endpiont sends the m data blocks to the first network node according to the first sending policy and the second sending policy, and by using the first stream. The data block in each of the n streams is sent to the first network node in the described mode. Details are not described herein again. When sending of the data block in each stream is complete, it means that sending of the to-be-sent target data stream on the sender endpiont is complete.

In the foregoing implementations of this application, protocol extension is performed on the existing QUIC protocol to obtain the second extended frame. The second extended frame supports carrying of a reliability level of a data block, a priority of a data block, and a deadline of a data block. The sender endpiont transfers respective attribute information of different data blocks in a same stream by using the second extended frame, in other words, different data blocks in the same stream may alternatively have different attribute information. In this way, the attribute information obtained by the network node of the distribution network is the actual attribute information of the data block, so that the attribute information of the data block can be transferred in the entire distribution network rather than only on the sender endpiont.

In a possible implementation of the first aspect, in an interaction procedure between the sender endpiont and the first network node, if the sender endpiont determines to actively discard some data blocks in a stream due to some reasons, and wants a peer end not to transfer the data. Similarly, the sender endpiont may use an extended frame (which may be referred to as a third extended frame) to notify the peer end. Specifically, the sender endpiont sends the third extended frame to the first network node. The third extended frame indicates the first network node not to send a target data block in the m data blocks to the next-hop node; and/or the third extended frame indicates the first network node to discard the target data block in the m data blocks.

In the foregoing implementations of this application, the sender endpiont may further indicate, by using the pre-extended third extended frame, the first network node to discard the target data block or no longer transmit the target data block. In this mode, data that is being transmitted on a transmission path can be adjusted in real time based on an actual requirement. This is flexible and can save bandwidth resources.

In a possible implementation of the first aspect, before the sender endpiont constructs the n streams streams for the target data stream, the first network node may further declare that the QUIC protocol provides extended frame support by starting registration (that is, providing an interface, and triggering registration through the interface) through static configuration (for example, in a configuration file mode) or by using an application-layer protocol application. Specifically, the first network node sends a handshake packet to the sender endpiont, and indicates, by using whether a packet parameter, namely, a transport parameter, of the handshake packet carries a specific target identifier, whether an extended frame is supported. Then, after receiving the handshake packet sent by the first network node, the sender endpiont parses a related field (for example, parses the related field by using the QUIC client) to determine whether the first network node supports the extended frame, that is, determines whether the handshake packet carries the specific target identifier; and if the handshake packet carries the specific target identifier, determines that the QUIC protocol deployed on the first network node provides the extended frame support. The extended frame includes at least any one of the first extended frame, the second extended frame, and the third extended frame.

In the foregoing implementations of this application, that the sender endpiont and the first network node determine, by using whether the handshake packet carries the target identifier, whether the sender endpiont or the first network node supports the extended frame is specifically described. This is feasible.

In a possible implementation of the first aspect, the second attribute information may include at least any one of the following attribute information: a priority of a data block, a reliability level of a data block, and a deadline (deadline) of a data block. The priority of the data block represents importance of the data block, in other words, a data block with a higher priority is more important. The reliability level of the data block represents integrity of the data block when the data block is sent by a current node (for example, the sender endpiont) and received by a peer node. The reliability level of the data block measures the integrity of the data block in a transmission process. For example, if a required reliability level of the data block is higher, it means that data cannot be lost in the process of transmitting the data block to the peer node, in other words, a difference between the data block received by the peer node and the data block sent by the current node is smaller. The deadline of the data block represents allowed transmission duration when the current data block is transmitted from one node to another node (which may be a next-hop node of the current node, or may be a node after several next hops, which is not limited herein). For example, it is assumed that a deadline of a data block is set to 200 ms. The data block is sent by the current node, and allowed transmission duration when the data block is transmitted to the another node is 200 ms. If transmission time exceeds 200 ms, it is considered that the transmission of the data block expires. It should be noted herein that, in embodiments of this application, the priority of the data block and the reliability level of the data block may be user-defined based on an actual requirement. For example, priorities of the data block may be set to p levels, and reliability levels of the data block may be set to q levels, where values of p and q may be user-defined.

In the foregoing implementations of this application, information that the second attribute information may be is specifically described. This has wide applicability, and makes sending policies formulated by the sender endpiont or a subsequent network node based on the attribute information diversified.

In a possible implementation of the first aspect, the first attribute information may include at least any one of the following attribute information: a priority of a stream, a reliability level of a stream, and a deadline of a data block in a stream. The priority of the stream represents importance of the stream, in other words, a transmitted data block in a stream with a higher priority is more important. The reliability level of the stream represents integrity of the stream when the stream is sent by a current node (for example, the sender endpiont) and received by a peer node. The reliability level of the stream measures integrity of a data block included in the stream in a transmission process. For example, if a required reliability level of the stream is higher, it means that data cannot be lost in a process of transmitting the data block included in the stream to the peer node, in other words, a difference between data received by the peer node and data sent by the current node is smaller. The deadline of the data block in the stream represents allowed transmission duration when the data block in the current stream is transmitted from one node to another node (which may be a next-hop node of the current node, or may be a node after several next hops, which is not limited herein). For example, it is assumed that a deadline of each data block in a stream is set to 180 ms. Each data block transmitted in the stream is sent by the current node, and allowed transmission duration when the data block is transmitted to the another node is 180 ms. If transmission time exceeds 180 ms, it is considered that the transmission of the data block expires. It should also be noted herein that, in embodiments of this application, the priority of the stream and the reliability level of the stream may be user-defined based on an actual requirement. For example, priorities of the stream may be set to k levels, and reliability levels of the stream may be set to v levels, where values of k and v may be user-defined.

In the foregoing implementations of this application, information that the first attribute information may be is specifically described. This has wide applicability, and makes sending policies formulated by the sender endpiont or a subsequent network node based on the attribute information diversified.

According to a second aspect, an embodiment of this application further provides a data transmission method, which may be used in the field of real-time audio and video propagation. The method may include: When a sender endpiont establishes a QUIC connection to a first network node of a distribution network, the first network node receives n groups of first attribute information sent by the sender endpiont by using a first extended frame, where n≥1, and a specific value of n may be user-defined. This is not specifically limited herein. The first extended frame is a frame obtained by performing protocol extension on a QUIC-compliant frame, and the n groups of first attribute information are obtained by the sender endpiont by defining attribute information for each of n streams streams. For example, the n groups of first attribute information may be obtained by the sender endpiont by defining the attribute information for each of the n streams streams through an API provided by a QUIC client, and the n streams are constructed by the sender endpiont for a to-be-sent target data stream, where one group of first attribute information corresponds to one stream. For example, it is assumed that the sender endpiont constructes four streams through the API. Correspondingly, four groups of first attribute information need to be defined, and one stream has one group of first attribute information. It should be noted herein that each group of first attribute information includes at least one piece of attribute information. Then, the first network node receives the n streams sent by the sender endpiont. The n streams are sent by the sender endpiont according to a first sending policy, and the first sending policy is determined by the sender endpiont based on the n groups of first attribute information. After receiving the n groups of first attribute information sent by the sender endpiont, the first network node notifies an application layer (for example, a distribution logic module) of the first network node of the n groups of first attribute information. After receiving the n groups of first attribute information, the application layer of the first network node determines a sending policy (which may also be referred to as a third sending policy) of the n streams, and continues to send the received n streams to a next-hop node according to the third sending policy. In other words, after receiving the n groups of first attribute information, the application layer of the first network node determines, by using a decision-making module at the application layer, a routing policy, a cache policy, whether to pass data down to the next-hop node, a distribution policy, and the like, including whether to perform forward error correction (forward error correction, FEC), whether to perform automatic repeat request (automatic repeat request, ARQ)-based retransmission, or the like. In addition, the first network node may also continue to transfer the received n groups of first attribute information to the next-hop node. In this way, the next-hop node (it is assumed that the next-hop node is not a receiver node) continues to determine a sending policy (which may be referred to as a fourth sending policy) of the n streams based on the n groups of first attribute information, and continues to send the n streams to another next-hop node according to the fourth sending policy.

In the foregoing implementations of this application, protocol extension is performed on the existing QUIC protocol to obtain the first extended frame, and respective attribute information of different streams is transferred by using the first extended frame. By default, data blocks (one stream may include a plurality of data blocks) transferred in a same stream have same attribute information, namely, attribute information of the stream. In this way, attribute information obtained by a network node of the distribution network is the actual attribute information of the data block, so that the attribute information of the data block can be transferred in the entire distribution network rather than only on a sender endpoint. Therefore, in an intermediate transmission phase, a sending policy executed by the network node of the distribution network based on the attribute information is more reliable. This implements corresponding reliable data transmission and delay assurance, and finally improves user experience.

In a possible implementation of the second aspect, before that the first network node receives the n streams sent by the sender endpiont, the method may further include: The first network node receives m groups of second attribute information sent by the sender endpiont by using a second extended frame. The second extended frame is a frame obtained by performing protocol extension on the QUIC protocol, and the m groups of second attribute information are obtained by defining attribute information by the sender endpiont for each of m data blocks (the m data blocks are data blocks included in a first stream) corresponding to the first stream (the first stream is any one of the n streams). Each group of second attribute information includes at least one piece of attribute information, and m≥1. Then, the first network node receives the m data blocks sent by the sender endpiont. The m data blocks are sent by the sender endpiont according to the first sending policy and a second sending policy, and the second sending policy is determined by the sender endpiont based on the m groups of second attribute information. In addition, the first network node further continues to transfer the received m groups of second attribute information to the next-hop node.

In the foregoing implementations of this application, protocol extension is performed on the existing QUIC protocol to obtain the second extended frame. The second extended frame supports carrying of a reliability level of a data block, a priority of a data block, and a deadline field of a data block. The sender endpiont transfers respective attribute information of different data blocks in a same stream by using the second extended frame, in other words, different data blocks in the same stream may alternatively have different attribute information. In this way, the attribute information obtained by the network node of the distribution network is the actual attribute information of the data block, so that the attribute information of the data block can be transferred in the entire distribution network rather than only on the sender endpiont.

In a possible implementation of the second aspect, in an interaction procedure between the sender endpiont and the first network node, if the sender endpiont determines to actively discard some data blocks in a stream due to some reasons, and wants a peer end not to transfer the data. Similarly, the sender endpiont may use an extended frame (which may be referred to as a third extended frame) to notify the peer end. Specifically, the first network node receives the third extended frame sent by the sender endpiont. The third extended frame is a frame obtained by performing protocol extension on the QUIC protocol. The third extended frame indicates the first network node not to send a target data block in the m data blocks to the next-hop node; and/or the third extended frame indicates the first network node to discard the target data block in the m data blocks. After receiving the third extended frame, the first network node may perform a corresponding operation by using the third extended frame, that is, not send the target data block to the next-hop node, and/or discard the target data block. Similar to the foregoing first or second extended frame, the third extended frame is also a frame obtained by performing protocol extension on the QUIC protocol.

In the foregoing implementations of this application, after receiving the third extended frame sent by the sender endpiont, the first network node may discard the target data block or no longer transmit the target data block by using the third extended frame. In this mode, data that is being transmitted on a transmission path can be adjusted in real time based on an actual requirement. This is flexible and can save bandwidth resources.

In a possible implementation of the second aspect, before the sender endpiont constructs the n streams streams for the target data stream, the first network node may further declare that the QUIC protocol provides extended frame support by starting registration (that is, providing an interface, and triggering registration through the interface) through static configuration (for example, in a configuration file mode) or by using an application-layer protocol application. In embodiments of this application, the first network node sends a handshake packet to the sender endpiont. The handshake packet carries a target identifier, and the target identifier represents that the QUIC protocol of the first network node provides the extended frame support. Specifically, the first network node may indicate, by using whether a packet parameter, namely, a transport parameter, of the handshake packet carries a specific target identifier, whether an extended frame is supported. The extended frame includes at least any one of the first extended frame, the second extended frame, and the third extended frame.

In the foregoing implementations of this application, that the sender endpiont and the first network node determine, by using whether the handshake packet carries the target identifier, whether the sender endpiont or the first network node supports the extended frame is specifically described. This is feasible.

In a possible implementation of the second aspect, the second attribute information may include at least any one of the following attribute information: a priority of a data block, a reliability level of a data block, and a deadline (deadline) of a data block. The priority of the data block represents importance of the data block, in other words, a data block with a higher priority is more important. The reliability level of the data block represents integrity of the data block when the data block is sent by a current node (for example, the sender endpiont) and received by a peer node. The reliability level of the data block measures the integrity of the data block in a transmission process. For example, if a required reliability level of the data block is higher, it means that data cannot be lost in the process of transmitting the data block to the peer node, in other words, a difference between the data block received by the peer node and the data block sent by the current node is smaller. The deadline of the data block represents allowed transmission duration when the current data block is transmitted from one node to another node (which may be a next-hop node of the current node, or may be a node after several next hops, which is not limited herein). For example, it is assumed that a deadline of a data block is set to 200 ms. The data block is sent by the current node, and allowed transmission duration when the data block is transmitted to the another node is 200 ms. If transmission time exceeds 200 ms, it is considered that the transmission of the data block expires. It should be noted herein that, in embodiments of this application, the priority of the data block and the reliability level of the data block may be user-defined based on an actual requirement. For example, priorities of the data block may be set to p levels, and reliability levels of the data block may be set to q levels, where values of p and q may be user-defined.

In the foregoing implementations of this application, information that the second attribute information may be is specifically described. This has wide applicability, and makes sending policies formulated by the sender endpiont or a subsequent network node based on the attribute information diversified.

In a possible implementation of the second aspect, the first attribute information may include at least any one of the following attribute information: a priority of a stream, a reliability level of a stream, and a deadline of a data block in a stream. The priority of the stream represents importance of the stream, in other words, a transmitted data block in a stream with a higher priority is more important. The reliability level of the stream represents integrity of the stream when the stream is sent by a current node (for example, the sender endpiont) and received by a peer node. The reliability level of the stream measures integrity of a data block included in the stream in a transmission process. For example, if a required reliability level of the stream is higher, it means that data cannot be lost in a process of transmitting the data block included in the stream to the peer node, in other words, a difference between data received by the peer node and data sent by the current node is smaller. The deadline of the data block in the stream represents allowed transmission duration when the data block in the current stream is transmitted from one node to another node (which may be a next-hop node of the current node, or may be a node after several next hops, which is not limited herein). For example, it is assumed that a deadline of each data block in a stream is set to 180 ms. Each data block transmitted in the stream is sent by the current node, and allowed transmission duration when the data block is transmitted to the another node is 180 ms. If transmission time exceeds 180 ms, it is considered that the transmission of the data block expires. It should also be noted herein that, in embodiments of this application, the priority of the stream and the reliability level of the stream may be user-defined based on an actual requirement. For example, priorities of the stream may be set to k levels, and reliability levels of the stream may be set to v levels, where values of k and v may be user-defined.

In the foregoing implementations of this application, information that the first attribute information may be is specifically described. This has wide applicability, and makes sending policies formulated by the sender endpiont or a subsequent network node based on the attribute information diversified.

According to a third aspect, an embodiment of this application provides a sender endpiont. The sender endpiont has a function of implementing the method according to any one of the first aspect or the possible implementations of the first aspect. The function may be implemented by hardware, or may be implemented by hardware executing corresponding software. The hardware or the software includes one or more modules corresponding to the function.

According to a fourth aspect, an embodiment of this application provides a network node. The network node is used as a first network node, and has a function of implementing the method according to any one of the second aspect or the possible implementations of the second aspect. The function may be implemented by hardware, or may be implemented by hardware executing corresponding software. The hardware or the software includes one or more modules corresponding to the function.

According to a fifth aspect, an embodiment of this application provides a computer device. The computer device may include a memory, a processor, and a bus system. The memory is configured to store a program; and the processor is configured to invoke the program stored in the memory to perform the method according to any one of the first aspect or the possible implementations of the first aspect of embodiments of this application, or is configured to invoke the program stored in the memory to perform the method according to any one of the second aspect or the possible implementations of the second aspect of embodiments of this application.

According to a sixth aspect, an embodiment of this application provides a computer-readable storage medium. The computer-readable storage medium stores instructions. When the instructions are run on a computer, the computer is enabled to perform the method according to any one of the first aspect or the possible implementations of the first aspect, or the computer is enabled to perform the method according to any one of the second aspect or the possible implementations of the second aspect.

According to a seventh aspect, an embodiment of this application provides a computer program. When the computer program is run on a computer, the computer is enabled to perform the method according to any one of the first aspect or the possible implementations of the first aspect, or the computer is enabled to perform the method according to any one of the second aspect or the possible implementations of the second aspect.

According to an eighth aspect, an embodiment of this application provides a chip. The chip includes at least one processor and at least one interface circuit, where the interface circuit is coupled to the processor. The at least one interface circuit is configured to: perform sending and receiving functions, and send instructions to the at least one processor. The at least one processor is configured to run a computer program or the instructions. The at least one processor has a function of implementing the method according to any one of the first aspect or the possible implementations of the first aspect, or the at least one processor has a function of implementing the method according to any one of the second aspect or the possible implementations of the second aspect. The function may be implemented by hardware, may be implemented by software, or may be implemented by using a combination of hardware and software. The hardware or software includes one or more modules corresponding to the foregoing function. In addition, the interface circuit is configured to communicate with a module other than the chip.

### BRIEF DESCRIPTION OF DRAWINGS

FIG. 1 is a schematic diagram of phases in a call process of an audio and video session;
FIG. 2 is a schematic diagram of optimization logic in an existing solution;
FIG. 3 is a schematic flowchart of a data transmission method according to an embodiment of this application;
FIG. 4 is a schematic diagram of a UDP extension mode according to an embodiment of this application;
FIG. 5 is a schematic diagram of a transmission process of data transmission and attribute information transmission according to an embodiment of this application;
FIG. 6 is a schematic topology diagram of an example according to an embodiment of this application;
FIG. 7 is a schematic diagram of a structure of a sender endpiont according to an embodiment of this application;
FIG. 8 is a schematic diagram of a structure of a network node according to an embodiment of this application; and
FIG. 9 is a schematic diagram of a structure of a computer device according to an embodiment of this application.

### DESCRIPTION OF EMBODIMENTS

Embodiments of this application provide a data transmission method and a device. In the method, protocol extension is performed on an existing QUIC protocol to obtain a first extended frame, and respective attribute information of different streams is transferred by using the first extended frame. By default, data blocks (one stream may include a plurality of data blocks) transferred in a same stream have same attribute information, namely, attribute information of the stream. In this way, attribute information obtained by a network node of a distribution network is the actual attribute information of the data block, so that the attribute information of the data block can be transferred in the entire distribution network rather than only on a sender endpoint. Therefore, in an intermediate transmission phase, a sending policy executed by the network node of the distribution network based on the attribute information is more reliable. This implements corresponding reliable data transmission and delay assurance, and finally improves user experience.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, terms "include", "have", and any other variations thereof are intended to cover non-exclusive inclusion, so that a process, method, system, product, or device that includes a series of units is not limited to those units, but may include other units not expressly listed or inherent to such a process, method, product, or device.

Embodiments of this application relate to a large amount of QUIC knowledge. To better understand the solutions in embodiments of this application, the following first describes related terms and concepts that may be used in embodiments of this application. It should be understood that explanations of related concepts may be limited due to specific situations of embodiments of this application, but it does not mean that this application can only be limited to the specific situations. There may be differences in the specific situations of different embodiments. Details are not limited herein.

### (1) Quick UDP Internet connections (quick UDP Internet connections, QUIC)

The QUIC, also referred to as a QUIC protocol, is an experimental network transport protocol located at a transport layer of an OSI model. The QUIC was developed by Google and implemented in 2013. The QUIC uses the user datagram protocol (user datagram protocol, UDP) protocol, and constructes a connection between two endpoints and supports multiplexing. At the beginning of QUIC design, it is expected that network security protection equivalent is provided to a secure sockets layer (secure sockets layer, SSL) or transport layer security (transport layer security, TLS) level to reduce delay time during data transmission and connection construction, and control bandwidth bidirectionally, to avoid network congestion. Google expects to use this protocol to replace the transmission control protocol (TCP), and make a transmission speed of a web page faster. In October 2018, the hypertext transfer protocol (HTTP) and QUIC working group of the Internet Engineering Task Force (IETF) officially renamed the HTTP over QUIC (HTTP over QUIC) to HTTP/3 in preparation for establishment of next-generation specifications.

In embodiments of this application, a prerequisite is that a sender endpiont and a first network node (namely, a nearest network node of the sender endpiont) of the distribution network have supported the QUIC.

### (2) Stream (stream) in the QUIC

Streams in the QUIC provide an application with a lightweight abstraction of ordered byte streams. The streams can be unidirectional or bidirectional. A unidirectional stream transmits data in one direction: from an initiator of the stream to a peer of the initiator. Bidirectional streams allow data to be sent in both directions. The stream can be constructed through data sending. The stream can also have a long service life that may be consistent with a life cycle of a connection.

The stream can be constructed by any end point and can be canceled. The QUIC does not provide any method to ensure ordering between bytes on different streams. The QUIC allows any quantity of streams to be operated at the same time, and allows any amount of data to be sent on any stream. This is subject to stream control constraints and stream limit constraints. A stream is identified by a numeric value in a connection, which is referred to as a stream ID (stream ID).

During an existing audio and video call, three streams are constructed by default to separately transmit audio data, video data, and screen sharing information data. However, in embodiments of this application, the sender endpiont may construct n streams based on a to-be-sent target data stream (for example, based on a data type), where n≥1. A value of n is not limited in this application, and is determined based on actual application.

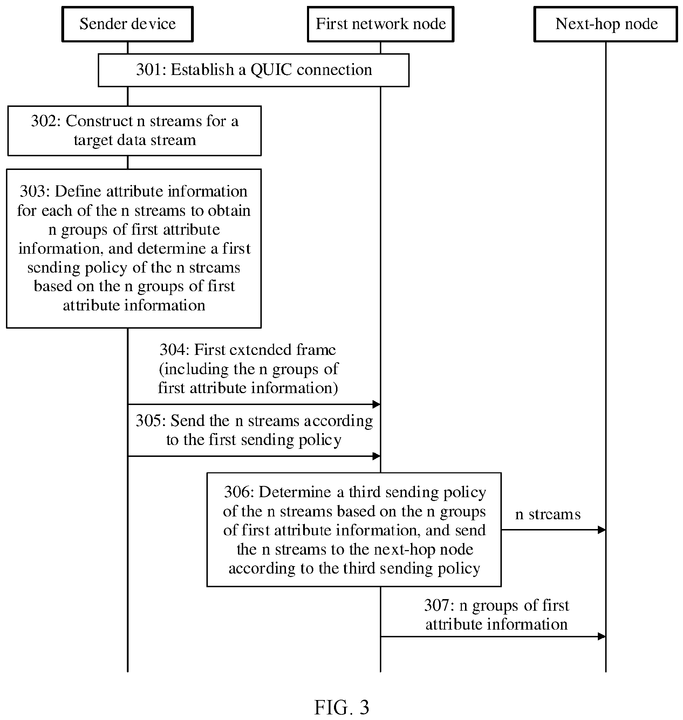

The following describes embodiments of this application with reference to the accompanying drawings. A person of ordinary skill in the art may learn that, with development of technologies and emergence of a new scenario, the technical solutions according to embodiments of this application are also applicable to a similar technical problem. Specifically, FIG. 3 is a schematic flowchart of a data transmission method according to an embodiment of this application. The method may specifically include the following steps.

301: A sender endpiont establishes a QUIC connection to a first network node of a distribution network.

In embodiments of this application, the sender endpiont and the first network node (namely, a nearest network node of the sender endpiont, or may also be referred to as an edge node of the sender endpiont) of the distribution network have supported the QUIC. Under this prerequisite, the sender endpiont establishes the QUIC connection to the first network node.

It should be noted that, in some implementations of this application, a QUIC client is deployed on the sender endpiont, and a QUIC server is deployed on the first network node. Specifically, the sender endpiont may be a terminal device, for example, a mobile phone (mobile phone), a tablet computer (pad), a computer with a transceiver function, a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal (for example, a camera) in a smart city (smart city), a wireless terminal in a smart home (smart home), or the like. Alternatively, the sender endpiont may be a wearable device, for example, a smart band or a smart watch. Alternatively, the sender endpiont may be a vehicle-mounted device or a network device, for example, a network device like a layer 3 switch, a router, a broadband gateway, a firewall, or a load balancer. Specifically, this application imposes no limitation on a type of the sender endpiont on which the QUIC client is deployed.

It should be further noted that, in some other implementations of this application, the QUIC server may also be deployed on various terminal devices and network devices similar to various terminal devices and network devices on which the client is deployed. In a typical audio and video session network, the QUIC server may be deployed on cloud equipment room servers established by major cloud vendors. Specifically, this application imposes no limitation on a type of the first network node on which the QUIC server is deployed.

302: The sender endpiont constructs n streams for a target data stream.

After establishing the QUIC connection to the first network node of the distribution network, the sender endpiont may construct, through an API provided by the QUIC client, the n streams for the to-be-sent target data stream on the sender endpiont, where n≥1, and a specific value of n may be user-defined. This is not specifically limited herein.

303: The sender endpiont defines attribute information for each of the n streams to obtain n groups of first attribute information, and determines a first sending policy of the n streams based on the n groups of first attribute information.

After constructing the n streams for the to-be-sent target data stream through the API, the sender endpiont further defines, through the API, the attribute information for each of the n streams to obtain the n groups of attribute information (which may be referred to as the first attribute information), where one group of first attribute information corresponds to one stream. For example, it is assumed that the sender endpiont constructes four streams through the API. Correspondingly, four groups of first attribute information need to be defined, and one stream has one group of first attribute information. It should be noted herein that each group of first attribute information includes at least one piece of attribute information.

It should be noted that, in some implementations of this application, the first attribute information may include at least any one of the following attribute information: a priority of a stream, a reliability level of a stream, and a deadline of a data block in a stream. The following describes a specific meaning of each piece of attribute information.

### (1) Priority of a stream

The priority of the stream represents importance of the stream, in other words, a transmitted data block in a stream with a higher priority is more important.

### (2) Reliability level of a stream

The reliability level of the stream represents integrity of a data block included in the stream when the stream is sent by a current node (for example, the sender endpiont) and received by a peer node. The reliability level of the stream measures the integrity of the data block transmitted in the stream in a transmission process. For example, if a required reliability level of the stream is higher, it means that data cannot be lost in the process of transmitting the data block included in the stream to the peer node, in other words, a difference between data received by the peer node and data sent by the current node is smaller.

### (3) Deadline of a data block in a stream

The deadline of the data block in the stream represents allowed transmission duration when the data block in the current stream is transmitted from one node to another node (which may be a next-hop node of the current node, or may be a node after several next hops, which is not limited herein). For example, it is assumed that a deadline of each data block in a stream is set to 180 ms. Each data block transmitted in the stream is sent by the current node, and allowed transmission duration when the data block is transmitted to the another node is 180 ms. If transmission time exceeds 180 ms, it is considered that the transmission of the data block expires.

It should be noted herein that, in embodiments of this application, the priority of the stream and the reliability level of the stream may be user-defined based on an actual requirement. For example, priorities of the stream may be set to k levels, and reliability levels of the stream may be set to v levels, where values of k and v may be user-defined.

For example, priorities of the stream may be set to three levels: a high priority, a medium priority, and a low priority (the priorities decrease in sequence). Different priorities correspond to different importance levels. Reliability levels of the stream may be set to three levels: complete reliability, semi-reliability, and low-reliability (or complete unreliability). In other words, the reliability levels decrease in sequence. Different reliability levels correspond to different integrity of data received by the peer node. Specifically, a quantity of levels of the priorities of the stream and a quantity of levels of the reliability levels of the stream are not limited in this application.

In addition, after obtaining the n groups of first attribute information, the sender endpiont further determines a sending policy (which may be referred to as the first sending policy) of the n streams based on the n groups of first attribute information. The n streams are constructed based on the to-be-sent target data stream on the sender endpiont. For example, it is assumed that the sender endpiont constructes four streams through the API. Each stream corresponds to one group of attribute information, the n streams form the to-be-sent target data stream on the sender endpiont, and each stream may include one or more data blocks. Data blocks included in a same stream belong to a same group of attribute information (namely, attribute information of the stream).

It should be noted herein that, because the value of n may be user-defined, the value of n may be determined based on an actual requirement. In other words, a quantity of constructed streams (namely, streams into which the to-be-sent target data stream is divided) may be user-defined based on the requirement. This is not specifically limited in this application.

It should be noted that, in embodiments of this application, the sender endpiont determines the sending policy (namely, the first sending policy) of the n streams based on the n groups of first attribute information. Because each group of first attribute information may be set differently, and amounts of attribute information included in the groups are also different, first sending policies formulated by the sender endpiont based on the attribute information may also be different. The following uses several typical sending modes of the first sending policy as examples.
a: A stream with a higher priority is sent first. For example, it is assumed that the sender endpiont constructes three streams that respectively correspond to an audio data stream, a video I-frame data stream, and a video P-frame data stream, and priorities of the audio data stream, the video I-frame data stream, and the video P-frame data stream are: the high priority, the medium priority, and the low priority. In this case, a data block in the audio data stream is preferentially sent, a data block in the video I-frame data stream is then sent, and a data block in the video P-frame data stream is finally sent, in other words, audio data stream>video I-frame data stream>video P-frame data stream.
b: When bandwidth resources are insufficient, more bandwidth is allocated to a stream with a higher priority.
c: If the first attribute information of the stream includes the deadline of the data block, the sender endpiont detects whether duration of sending a data block in the stream to the peer node exceeds the deadline, and if the duration exceeds the deadline, discards the corresponding data block.
d: If an I-frame included in a data block in the stream is discarded, all P-frames before a next I-frame are also discarded.
e: If the first attribute information of the stream includes the reliability level and has the deadline, when the reliability level meets a requirement of a preset level (for example, the semi-reliability), whether duration of sending a data block in the stream to the peer node exceeds the deadline is detected, and if the duration exceeds the deadline, the data block is discarded.

It should be noted that the foregoing description of the first sending policy is merely an example. In actual application, a corresponding sending policy may be formulated based on a specific situation of the n groups of first attribute information. Details are not described in this application, and a specific sending mode is not limited.

304: The sender endpiont sends the n groups of first attribute information to the first network node by using a first extended frame, where the first extended frame is a frame obtained by performing protocol extension on a QUIC-compliant frame.

After defining the attribute information of each stream to obtain the n groups of first attribute information, the sender endpiont further sends the n groups of first attribute information to the first network node. It should be noted herein that the sender endpiont sends the first attribute information to the first network node is implemented by using a pre-defined extended frame (which may be referred to as the first extended frame), and the first extended frame is a frame obtained by performing protocol extension on the QUIC protocol.

For ease of understanding, the following describes, by using a specific implementation, how the first extended frame is obtained through extension. For example, in this embodiment of this application, the QUIC protocol is extended as follows: STREAM_ATTRIBUTE_FRAME (namely, the first extended frame) is newly added. A protocol format of STREAM_ATTRIBUTE_FRAME may be shown in Table 1.

**Table 1 Protocol format of STREAM_ATTRIBUTE_FRAME**

| |
|---|
| type |
| stream_id |
| flags (8 bits) |
| [reliability] (low 2 bits) |
| [stream_priority] (mid 3 bits) |
| [deadline] (high 11 bits) |
| ... |

type indicates a newly added STREAM_ATTRIBUTE_FRAME type, namely, the first extended frame. stream_id indicates a variable-length stream ID, which is used to distinguish streams. flags identifies whether to carry attribute information such as reliability (namely, the reliability level), a priority (namely, the priority), and a deadline (namely, the deadline) that occupy low-order 3 bits, and OthersReserved. reliability indicates a reliability level of a stream. For example, 0x00 indicates the complete reliability, 0x01 indicates the unreliability, and 0x11 indicates the semi-reliability. reliability occupies low-order 2 bits. stream_priority indicates a priority of the stream. For example, a value ranges from 0 to 7, and a smaller value indicates a higher priority. stream_priority occupies middle 3 bits. deadline indicates deadlines of all data blocks in the stream, and occupies high-order 11 bits.

It should be noted that, in some implementations of this application, the reliability may alternatively be identified by using the deadline of the data block. For example, a large deadline value may be set to identify that the reliability level of the current stream is high (for example, the complete reliability). On the contrary, a small deadline value is set to identify that the reliability level of the current stream is low (for example, the unreliability). A reliability level corresponding to a deadline value between the large deadline value and the small deadline value is also between the complete reliability and the unreliability, for example, may be considered as the semi-reliability. Alternatively, intermediate values may be further classified into a plurality of reliability levels. This is not specifically limited herein. For example, if the deadline of the data block is uint16_t, [1, 1000] indicates a valid deadline, which is the semi-reliability; 0 identifies the unreliability; and 0xFFFF identifies the complete reliability. In another example, the reliability level may alternatively be identified by extending Stream Frame. For example, if the current QUIC has Stream_Frame identifying the complete reliability and Message_Frame (datagram) identifying the unreliability, RT_Stream_Frame may be newly added to identify the semi-reliability. This is not specifically limited in this application.

In an embodiment of this application, a QUIC protocol stack of the sender endpiont may transfer the attribute information of the stream to the first network node by using the extended frame STREAM_ATTRIBUTE_FRAME. It should be noted that, in embodiments of this application, attribute information of streams needs to be transferred to the first network node before the streams are transmitted. If a constructed stream remains unchanged, attribute information of the stream only needs to be transferred for one time after the stream is constructed, and the sender endpiont can normally send data blocks in the streams. The attribute information of the stream is transferred by using the first extended frame. A specific transfer process may be as follows: 1. After the stream is constructed, the first extended frame is separately put into a transmission packet, and is sent before a first data packet of a first data block in the stream is sent, where the transmission packet is essentially a control message. 2. After the stream is constructed, the first extended frame is put into the first data packet of the first data block for transmission, in other words, the first data packet of the first data block in the stream carries the attribute information of the stream, that is, the first data packet and the attribute information of the stream are put into one packet for transmission. Specifically, an implementation of how the sender endpiont transfers the n groups of first attribute information to the first network node by using the first extended frame is not limited in this application.

It should be further noted that, in some implementations of this application, the QUIC protocol may be further extended in this embodiment of this application by adding attribute information of a corresponding stream to a QUIC packet header in addition to by adding STREAM_ATTRIBUTE_FRAME (namely, the first extended frame) (as shown in Table 1). For example, priority, reliable, and deadline fields may be directly added to a QUIC 1-RTT packet (short packet header), and the three fields are exposed. Specific format modifications include but are not limited to the following implementations.

An original format of the QUIC 1-RTT packet is as follows:

```
          1-RTT Packet {
                Header Form (1) = 0,
                Fixed Bit (1) = 1,
                Spin Bit (1),
                Reserved Bits (2),
                Key Phase (1),
                Packet Number Length (2),
                Destination Connection ID (0..160),
                Packet Number (8..32),
                Packet Payload (8..),
              }
```

Based on the original format of the foregoing QUIC 1-RTT packet, a modification solution for adding attribute information of a stream may be a fixed carrying mode, and specific modifications are as follows:

```
          1-RTT Packet {
                Header Form (1) = 0,
                Fixed Bit (1) = 1,
                Spin Bit (1),
                Reserved Bits (2),
                Key Phase (1),
                Packet Number Length (2),
                Destination Connection ID (0..160),
                Packet Number (8..32),
                Priority(4),
                Reliable(2),
                Deadline(10),
                Packet Payload (8..),
              }
```

It should be noted that, in addition to the foregoing fixed carrying mode, the attribute information of the stream may alternatively be carried by using flags. Each bit of flags identifies attribute information of a corresponding stream, and specific modifications are as follows:

```
          1-RTT Packet {
                Header Form (1) = 0,
                Fixed Bit (1) = 1,
                Spin Bit (1),
                Reserved Bits (2),
                Key Phase (1),
                Packet Number Length (2),
                Destination Connection ID (0..160),
                Packet Number (8..32),
                flags(8),
                Priority(3),
                Reliable(2),
                Deadline(10),
                Packet Payload (8..),
              }
```

It should be noted herein that, in embodiments of this application, step 303 and step 304 are not subject to a specific execution sequence. The sender endpiont may perform step 303 before performing step 304, or may perform step 304 before performing step 303, or may perform step 303 and step 304 simultaneously. This is not specifically limited in this application.

305: The sender endpiont sends the n streams to the first network node according to the first sending policy.

After determining the first sending policy based on the n groups of first attribute information, the sender endpiont sends the n streams to the QUIC server of the first network node according to the first sending policy.

306: The first network node determines a third sending policy of the n streams based on the n groups of first attribute information, and sends the n streams to the next-hop node according to the third sending policy.

After receiving the n groups of first attribute information sent by the sender endpiont, the first network node notifies an application layer (for example, a distribution logic module) of the first network node of the n groups of first attribute information. After receiving the n groups of first attribute information, the application layer of the first network node determines a sending policy (which may also be referred to as the third sending policy) of the n streams, and continues to send the received n streams to the next-hop node according to the third sending policy. In other words, after receiving the n groups of first attribute information, the application layer of the first network node determines, by using a decision-making module at the application layer, a routing policy, a cache policy, whether to pass data down to the next-hop node, a distribution policy, and the like, including whether to perform FEC, whether to perform ARQ-based retransmission, or the like.

Specifically, in this embodiment of this application, the first network node first performs parsing based on the received first extended frame. For example, after receiving the first extended frame STREAM_ATTRIBUTE_FRAME, the first network node first obtains a related signalthrough parsing. Then, the QUIC server of the first network node inputs the signal to an interpretation module for interpretation, and provides specific information based on level-by-level signals. In this embodiment of this application, because only the attribute information of the stream is used, in other words, there is only one layer of signals, an interpretation policy of the interpretation module may be: directly filling a signal carried at the layer into a final output of a related attribute. Then, the QUIC server notifies the application layer of interpreted information. The application layer inputs the information to the decision-making module. Then, the decision-making module determines, based on the information, the routing policy, the cache policy, whether to pass the data down to the next-hop node, the distribution policy, and the like, including whether to perform FEC, whether to perform ARQ-based retransmission, or the like.

It should be noted that, in embodiments of this application, the application layer of the first network node determines the sending policy (namely, the third sending policy) of the n streams based on the n groups of first attribute information. Because each group of first attribute information may be set differently, and amounts of attribute information included in the groups are also different, third sending policies formulated by the first network node based on the attribute information may also be different. The following uses several typical sending modes of the third sending policy as examples.
a: A stream with a higher priority is sent first.
b: When bandwidth resources are insufficient, more bandwidth is allocated to a stream with a higher priority.
c: If the first attribute information of the stream includes the deadline of the data block, the sender endpiont detects whether duration of sending a data block in the stream to the peer node exceeds the deadline, and if the duration exceeds the deadline, discards the corresponding data block.
d: If an I-frame included in a data block in the stream is discarded, all P-frames before a next I-frame are also discarded.
e: If the first attribute information of the stream includes the reliability level and has the deadline, when the reliability level meets a requirement of a preset level (for example, the semi-reliability), whether duration of sending a data block in the stream to the peer node exceeds the deadline is detected, and if the duration exceeds the deadline, the data block is discarded.
f: If the first attribute information of the stream includes the reliability level and has the deadline, when the reliability level meets a requirement of a preset level (for example, the semi-reliability), whether a difference between the deadline and duration of completing sending of the data block in the stream reaches a preset threshold is detected to determine whether transmission of the data block is about to expire. For example, the deadline is set to 200 ms, and the transmission duration of the data block is 180s. It is assumed that the preset threshold is 15 ms. That 200-180=20 is greater than 15 ms, and it is considered that the transmission of the data block is about to expire. If the transmission of the data block is about to expire, an FEC policy is used to ensure that no delay is caused by retransmission.
g: If the first attribute information of the stream includes the reliability level, and the reliability level meets a requirement of a preset level (for example, the semi-reliability), a temporary cache is locally established on the first network node, and is discarded after it is determined that transmission of a data block expires or is about to expire, to release memory.
h: If the first attribute information of the stream includes the reliability level, the deadline may be set based on the reliability level, where a higher reliability level indicates a longer deadline. For example, if it is the complete reliability, a longer deadline may be set; or if it is the unreliability, FEC may be directly performed for one time or direct forwarding may be performed, and caching may not be performed.
i: If the first attribute information of the stream includes the priority, different routing policies may be selected based on priorities. For example, if the priority is higher, a better distribution link (for example, a private line with a high computing capability and good network quality) may be selected; or if the priority is lower, a distribution link of a public network with a high concurrent processing capability and good network quality may be selected.

In conclusion, the first network node of the distribution network may determine the third sending policy based on the n groups of first attribute information. If the first attribute information includes reliability levels, different cache policies may be used based on the reliability levels to allocate memory. If the first attribute information includes priorities, different routing modes, different sending sequences, or different bandwidth resource allocation may be used based on the priorities. For example, a stream with a high priority is distributed to a cluster with a high configuration and a fast processing speed, and a stream with a low priority is distributed to a cluster with high concurrent performance. If the first attribute information includes the deadline, a data processing policy may be determined based on the deadline. For example, when transmission of a data block expires, the data block may be directly discarded, and a bandwidth resource, a retransmission policy, and the like are allocated based on a priority.

It should be noted that the foregoing description of the third sending policy is merely an example. In actual application, a corresponding sending policy may be formulated based on a specific situation of the n groups of first attribute information. Details are not described in this application, and a specific sending mode is not limited.

307: The first network node transfers the n groups of first attribute information to the next-hop node.

In addition, the first network node may also continue to transfer the received n groups of first attribute information to the next-hop node. In this way, the next-hop node (it is assumed that the next-hop node is not a receiver node) continues to determine a sending policy (which may be referred to as a fourth sending policy) of the n streams based on the n groups of first attribute information, and continues to send the n streams to another next-hop node according to the fourth sending policy.

It should be noted herein that, in some implementations of this application, the next-hop node may be another network node of the distribution network, or may be the receiver endpoint , and may or may not support the QUIC protocol. The following separately describes the QUIC protocol.
(1) The next-hop node is a network node of the distribution network, and the network node also supports the QUIC protocol.

For example, it is assumed that the next-hop node of the first network node is also the network node (which may be referred to as a second network node) of the distribution network, and the second network node also supports the QUIC protocol. After receiving the n groups of first attribute information sent by the first network node, the second network node continues to determine the sending policy (which may be referred to as the fourth sending policy) of the n streams based on the n groups of first attribute information, and continues to send the n streams downstream according to the fourth sending policy until the n streams are sent to the receiver endpoint . In this process, each network node of the distribution network transfers the n groups of first attribute information to a next node until the n groups of first attribute information are transferred to the receiver endpoint . It should be noted that in embodiments of this application, the fourth sending policy is similar to the third sending policy of the first network node. For details, refer to a mode of the third sending policy. Details are not described herein again.

After receiving the n groups of first attribute information and the n streams, the receiver endpoint decodes data blocks (namely, data blocks retained after scheduling) in the n streams according to a scheduling policy of the receiver endpoint , renders the data blocks, and plays the data blocks.

(2) The next-hop node is a network node of the distribution network, and the network node does not support the QUIC protocol.

For example, it is assumed that the next-hop node of the first network node is the network node (which may be referred to as a second network node) of the distribution network, but the second network node does not support the QUIC protocol. For example, when most vendors construct their own real-time transmission networks, protocols that carry data on the transmission networks are proprietary protocols developed based on a UDP. In this case, attribute information can be transmitted on each node of the real-time transmission networks through similar extension. In other words, if the protocol is a protocol of another distribution network protocol, protocol extension may be performed similar to the QUIC protocol, so that the n groups of first attribute information can be transmitted in the entire distribution network until the n groups of first attribute information are transmitted to the receiver endpoint .

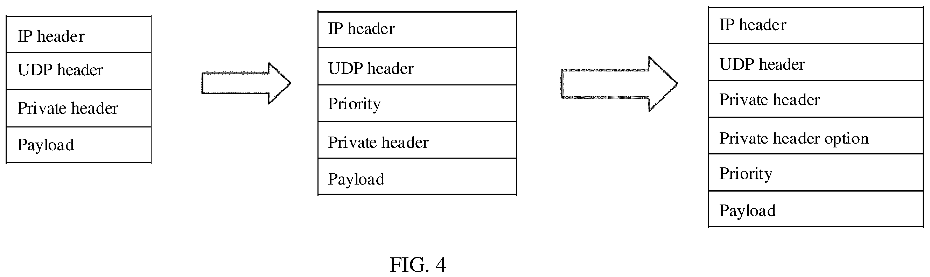

For ease of understanding, the following uses the UDP as an example to describe a protocol extension mode. Specifically, an extended protocol format may be shown in FIG. 4. A carried field may be fixedly carried or placed in Option by using an extended option field, and may be a selected interested field, for example, attribute information such as a reliability level, a deadline of a data block, or a priority, or even more. This is not specifically limited in this application. It should be noted that extension modes of different protocols are similar. For details, refer to the foregoing extension of the QUIC protocol. Details are not described herein again.

Similarly, after receiving the n groups of first attribute information and the n streams, the receiver endpoint decodes data blocks (namely, data blocks retained after scheduling) in the n streams according to a scheduling policy of the receiver endpoint, renders the data blocks, and plays the data blocks.

(3) The next-hop node is the receiver endpoint.

For example, it is assumed that the next-hop node of the first network node is the receiver endpoint. After receiving the n groups of first attribute information and the n streams, the receiver endpoint decodes data blocks (namely, data blocks retained after scheduling) in the n streams according to a scheduling policy of the receiver endpoint, renders the data blocks, and plays the data blocks.

It should be noted herein that, in embodiments of this application, step 306 and step 307 are not subject to a specific execution sequence. The sender endpiont may perform step 306 before performing step 307, or may perform step 307 before performing step 306, or may perform step 306 and step 307 simultaneously. This is not specifically limited in this application.

In the foregoing implementations of this application, protocol extension is performed on the existing QUIC protocol to obtain the first extended frame (for example, STREAM_ATTRIBUTE_FRAME). The first extended frame supports carrying of the field of the reliability level of the stream, the field of the priority of the stream, and the field of the deadline of the data block in the stream, and reserves an extended attribute to declare attribute information of a data block carried in the corresponding stream, to guide a subsequent network node to formulate a sending policy. The sender endpiont transfers respective attribute information of different streams by using the first extended frame. By default, data blocks transferred in a same stream have same attribute information, in other words, data carried by the same stream has the same attribute information, namely, attribute information of the stream. In this way, attribute information obtained by a network node of the distribution network is the actual attribute information of the data block, so that the attribute information of the data block can be transferred in the entire distribution network rather than only on the sender endpiont.

However, in some other implementations of this application, in addition to supporting configuration of the n groups of first attribute information for the n streams constructed in one QUIC session, the sender endpiont may alternatively support configuration of different attribute information for different data blocks in each of the n streams constructed in the QUIC session. In other words, different data blocks in a same stream may have different attribute information.

Specifically, in some other implementations of this application, before step 305, the method may further include:

The sender endpiont defines, through the API, attribute information for each of m data blocks (the m data blocks are data blocks included in a first stream) corresponding to the first stream (the first stream is any one of the n streams) to obtain m groups of attribute information (which may be referred to as second attribute information), and determines a sending policy (which may be referred to as a second sending policy) of the m data blocks based on the m groups of second attribute information. Each group of second attribute information includes at least one piece of attribute information, and m≥1. For ease of understanding, an example is used below. It is assumed that the sender endpiont constructes three streams through the API: a stream 1, a stream 2, and a stream 3. In addition to correspondingly defining three groups of first attribute information (one stream has one group of first attribute information), attribute information may be further defined for a data block included in each stream. It is assumed that the stream 1 includes m1 data blocks, the stream 2 includes m2 data blocks, and the stream 3 includes m3 data blocks. Attribute information may be defined for the data blocks included in each stream. In this case, m1 groups of second attribute information may be obtained for the stream 1, m2 groups of second attribute information may be obtained for the stream 2, and m3 groups of second attribute information may be obtained for the stream 3.

It should be noted that, in some implementations of this application, the second attribute information may include at least any one of the following attribute information: a priority of a data block, a reliability level of a data block, and a deadline of a data block. The following describes a specific meaning of each piece of attribute information.

### (1) Priority of the data block

The priority of the data block represents importance of the data block, in other words, a data block with a higher priority is more important.

### (2) Reliability level of the data block

The reliability level of the data block represents integrity of the data block when the data block is sent by a current node (for example, the sender endpiont) and received by a peer node. The reliability level of the data block measures the integrity of the data block in a transmission process. For example, if a required reliability level of the data block is higher, it means that data cannot be lost in the process of transmitting the data block to the peer node, in other words, a difference between the data block received by the peer node and the data block sent by the current node is smaller.

### (3) Deadline of the data block

The deadline of the data block represents allowed transmission duration when the current data block is transmitted from one node to another node (which may be a next-hop node of the current node, or may be a node after several next hops, which is not limited herein). For example, it is assumed that a deadline of a data block is set to 200 ms. The data block is sent by the current node, and allowed transmission duration when the data block is transmitted to the another node is 200 ms. If transmission time exceeds 200 ms, it is considered that the transmission of the data block expires.

It should be noted herein that, in embodiments of this application, the priority of the data block and the reliability level of the data block may be user-defined based on an actual requirement. For example, priorities of the data block may be set to p levels, and reliability levels of the data block may be set to q levels, where values of p and q may be user-defined.

For example, priorities of the data block may be set to three levels: a high priority, a medium priority, and a low priority (the priorities decrease in sequence). Different priorities correspond to different importance levels. Reliability levels of the data block may be set to three levels: complete reliability, semi-reliability, and low-reliability (or complete unreliability). In other words, the reliability levels decrease in sequence. Different reliability levels correspond to different integrity of a data block received by the peer node. Specifically, a quantity of levels of the priorities of the data block and a quantity of levels of the reliability levels of the data block are not limited in this application.

It should be further noted that, in embodiments of this application, the sender endpiont determines the sending policy (namely, the second sending policy) of the m data blocks in the first stream based on the m groups of second attribute information. Because each group of second attribute information may be set differently, and amounts of attribute information included in the groups are also different, second sending policies formulated by the sender endpiont based on the attribute information may also be different. The following uses several typical sending modes of the second sending policy as examples.
a: A data block with a higher priority is sent first.
b: When bandwidth resources are insufficient, more bandwidth is allocated to a data block with a higher priority.
c: If the second attribute information includes the deadline of the data block, the sender endpiont detects whether duration of sending a data block to the peer node exceeds the deadline, and if the duration exceeds the deadline, discards the corresponding data block.
d: If an I-frame included in a data block is discarded, all P-frames before a next I-frame are also discarded.
f: If the second attribute information includes the reliability level and has the deadline, when the reliability level meets a requirement of a preset level (for example, the semi-reliability), whether a difference between the deadline and duration of completing sending of data blocks in a same stream reaches a preset threshold is detected to determine whether transmission of the data block is about to expire. If the transmission of the data block is about to expire, an FEC policy is used to ensure that no delay is caused by retransmission.

It should be noted that the foregoing description of the second sending policy is merely an example. In actual application, a corresponding sending policy may be formulated based on a specific situation of the m groups of second attribute information. Details are not described in this application, and a specific sending mode is not limited.

After obtaining the m groups of second attribute information, the sender endpiont further sends the m groups of second attribute information to the first network node. It should be noted herein that the sender endpiont sends the second attribute information to the first network node is implemented by using a pre-defined extended frame (which may be referred to as a second extended frame), and the second extended frame is a frame obtained by performing protocol extension on the QUIC protocol.

For ease of understanding, the following describes, by using a specific implementation, how the second extended frame is obtained through extension. For example, in this embodiment of this application, the QUIC protocol is extended as follows: BLOCK_INFO_FRAME (namely, the second extended frame) is newly added. A protocol format of BLOCK_INFO_FRAME may be shown in Table 2.

**Table 2 Protocol format of BLOCK_INFO_FRAME**

| |
|---|
| type |
| stream_id |
| block offset_start |
| block len |
| flags (8 bits) |
| [reliability] |
| [priority] |
| [deadline] |
| ... |

type indicates a newly added BLOCK_INFO_FRAME type, namely, the second extended frame. stream_id indicates a variable-length stream ID, which is used to distinguish streams. block offset_start indicates a data start offset, namely, uint32_t, of a data block. block len indicates a data length, namely, uint32_t, of the data block. flags identifies whether to carry attribute information such as reliability (namely, the reliability level), a priority (namely, the priority), and a deadline (namely, the deadline) that occupy low-order 3 bits, and OthersReserved. reliability indicates a reliability level of the data block. For example, 0x00 indicates the complete reliability, 0x01 indicates the unreliability, and 0x11 indicates the semi-reliability. reliability occupies low-order 2 bits. priority indicates a priority of the data block. For example, a value ranges from 0 to 7, and a smaller value indicates a higher priority. priority occupies middle 3 bits. deadline indicates a deadline of the data block, and occupies high-order 11 bits.

It should be noted that, in some implementations of this application, the reliability may alternatively be identified by using the deadline of the data block. For example, a large deadline value may be set to identify that the reliability level of the current data block is high (for example, the complete reliability). On the contrary, a small deadline value is set to identify that the reliability level of the current data block is low (for example, the unreliability). A reliability level corresponding to a deadline value between the large deadline value and the small deadline value is also between the complete reliability and the unreliability, for example, may be considered as the semi-reliability. Alternatively, intermediate values may be further classified into a plurality of reliability levels. This is not specifically limited herein. For example, if the deadline of the data block is uint16_t, [1, 1000] indicates a valid deadline, which is the semi-reliability; 0 identifies the unreliability; and 0xFFFF identifies the complete reliability. In another example, the reliability level may alternatively be identified by extending Stream Frame. For example, if the current QUIC has Stream_Frame identifying the complete reliability and Message _Frame (datagram) identifying the unreliability, RT_Stream_Frame may be newly added to identify the semi-reliability. This is not specifically limited in this application.

In an embodiment of this application, a QUIC protocol stack of the sender endpiont may transfer the attribute information of the stream to the first network node by using the extended frame BLOCK_INFO_FRAME. It should be noted that, in embodiments of this application, attribute information of a same stream needs to be transferred to the first network node before the stream is transmitted. The attribute information of the data blocks in the same stream is transferred by using the second extended frame. A specific transfer process may be as follows: 1. After the stream is constructed, the second extended frame is separately put into a transmission packet, and is sent before a first data packet of a first data block in the stream is sent, where the transmission packet is essentially a control message. 2. After the stream is constructed, the second extended frame is put into the first data packet of the first data block for transmission, in other words, the first data packet of the first data block in the stream carries the attribute information of the data block, that is, the first data packet and the attribute information of the data block are put into one packet for transmission. Specifically, an implementation of how the sender endpiont transfers the m groups of second attribute information to the first network node by using the second extended frame is not limited in this application.

It should be further noted that, in some implementations of this application, the QUIC protocol may be further extended in this embodiment of this application by directly adding attribute information of a corresponding data block to a QUIC packet header in addition to by adding BLOCK_INFO_FRAME (namely, the second extended frame) (as shown in Table 2). A specific mode is similar to the foregoing operation of directly adding the attribute information of the corresponding stream to the QUIC packet header. For details, reference may be made to the foregoing process. Details are not described herein again.

After determining the second sending policy based on the m groups of second attribute information, the sender endpiont sends the m data blocks to the QUIC server of the first network node according to the first sending policy and the second sending policy. The data block in each of the n streams is sent to the first network node in the described mode. Details are not described herein again. When sending of the data block in each stream is complete, it means that sending of the to-be-sent target data stream on the sender endpiont is complete.

After receiving the m groups of second attribute information sent by the sender endpiont, the first network node notifies an application layer (for example, a distribution logic module) of the first network node of the m groups of second attribute information. After receiving the m groups of second attribute information, the application layer of the first network node determines a sending policy (which may also be referred to as a fifth sending policy) of each data block, and continues to send each received data block to the next-hop node according to the fifth sending policy. In other words, after receiving the m groups of second attribute information, the application layer of the first network node determines, by using a decision-making module at the application layer, a routing policy, a cache policy, whether to pass data down to the next-hop node, a distribution policy, and the like.

Specifically, in this embodiment of this application, the first network node first performs parsing based on the received first extended frame or the received second extended frame. For example, after receiving the first extended frame STREAM_ATTRIBUTE_FRAME or the second extended frame BLOCK_INFO_FRAME, the first network node first obtains a related information amount through parsing. Then, the QUIC server of the first network node inputs the signal to an interpretation module for interpretation, and provides specific information based on level-by-level signals. In this embodiment of this application, because not only the attribute information of the stream is used, but also attribute information of different data blocks in a same stream is used. In other words, there are a plurality of layers of signals, an interpretation policy of the interpretation module may include but is not limited to the following manners:
Policy 1: A value of a signal at a top layer is used as final output information. For example, if stream-level attribute information has a reliability level and a data block in a stream also has a reliability level, a reliability level of a stream at the top layer is used. If stream-level attribute information does not have a deadline and a data block in a stream has a deadline, the deadline of the data block is used.
Policy 2: A value of a signal at a bottom layer is used as final output information. For example, if stream-level attribute information has a reliability level and a data block in a stream also has a reliability level, a reliability level of a data block at the bottom layer is used.
Policy 3: If a signal has values at different levels, the values of all the levels are combined to determine a value. For example, if reliability levels are numerically represented, a smallest value may be used, a priority may be obtained through direct weighting, and the like.

Then, the QUIC server notifies the application layer of interpreted information. The application layer inputs the information to the decision-making module. Then, the decision-making module determines, based on the information, the routing policy, the cache policy, whether to pass the data down to the next-hop node, the distribution policy, and the like, including whether to perform FEC, whether to perform ARQ-based retransmission, or the like.

It should be noted herein that the fifth sending policy is similar to the third sending policy, and a difference lies in that attribute information of the third sending policy is based on first attribute information of a stream, and attribute information of the fifth sending policy is based on second attribute information of different data blocks in a same stream. However, principles for determining the sending policies are similar. For details, refer to the implementation process of the third sending policy. Details are not described herein again.

In addition, the first network node may also continue to transfer the received m groups of second attribute information to the next-hop node. In this way, the next-hop node (it is assumed that the next-hop node is not a receiver node) continues to determine a sending policy (which may be referred to as a sixth sending policy) of each data block based on the m groups of second attribute information, and continues to send each data block to a next-hop node according to the six sending policy. A specific process is similar to the foregoing step 306 and step 307. For details, refer to the process in which the first network node sends the stream and the n groups of first attribute information in the foregoing step 306 and step 307. Details are not described herein again.

In the foregoing implementations of this application, protocol extension is performed on the existing QUIC protocol to obtain the second extended frame (for example, BLOCK_INFO_FRAME). The second extended frame supports carrying of the field of the reliability level of the data block, the field of the priority of the data block, and the field of the deadline of the data block. The sender endpiont transfers respective attribute information of different data blocks in a same stream by using the second extended frame, in other words, different data blocks in the same stream may alternatively have different attribute information to distinguish attributes of different data blocks in the same stream by extending attributes at another layer. In this way, the attribute information obtained by the network node of the distribution network is the actual attribute information of the data block, so that the attribute information of the data block can be transferred in the entire distribution network rather than only on the sender endpiont.

It should be noted that, in the foregoing embodiment of this application, the sender endpiont transfers respective attribute information of different data blocks in the same stream by using the second extended frame. In some other implementations of this application, the attribute information (namely, the first attribute information) of the stream may not be defined. Instead, attribute information is directly defined for a data block forming the target data stream, and the attribute information is also carried in an extended frame and transferred to the first network node. A specific process is similar to the foregoing process. Details are not described herein again.

It should be further noted that, in some implementations of this application, in addition to that attribute information may be at a stream level and a level of different data blocks in a stream, more levels may be obtained in one data block through division. In other words, more blocks having attribute information may be split at the data block level to carry finer-grained attribute information, and a new extended frame is defined to notify the first network node. For example, a GOP may be defined as a data block, and an I-frame and a P-frame of the GOP may be further split. A specific operation manner is similar to the foregoing manner of defining attribute information of different data blocks in the stream. For details, refer to the foregoing description. Details are not described herein again.

It should be further noted that, in some other implementations of this application, in an interaction procedure between the sender endpiont and the first network node, if the sender endpiont determines to actively discard some data blocks in a stream due to some reasons, and wants a peer end not to transfer the data. Similarly, the sender endpiont may use an extended frame (which may be referred to as a third extended frame) to notify the peer end. Specifically, the sender endpiont sends the third extended frame to the first network node. The third extended frame indicates the first network node not to send a target data block in the m data blocks to the next-hop node; and/or the third extended frame indicates the first network node to discard the target data block in the m data blocks. After receiving the third extended frame, the first network node may perform a corresponding operation by using the third extended frame, that is, not send the target data block to the next-hop node, and/or discard the target data block. Similar to the foregoing first or second extended frame, the third extended frame is also a frame obtained by performing protocol extension on the QUIC protocol.

For ease of understanding, the following describes, by using a specific implementation, how the third extended frame is obtained through extension. For example, in this embodiment of this application, the QUIC protocol is extended as follows: DROP_BLOCK_FRAME (namely, the third extended frame) is newly added. A protocol format of DROP_BLOCK_FRAME may be shown in Table 3.

**Table 3 Protocol format of DROP_BLOCK_FRAME**

| |
|---|
| type |
| stream_id |
| offset |
| length |
| ... |

type indicates a newly added DROP_BLOCK_FRAME type, namely, the third extended frame. stream_id indicates a variable-length stream ID, which is used to distinguish streams. offset indicates an offset of a data block to be actively discarded. length indicates a length of the data block to be discarded.

It should be noted herein that, in embodiments of this application, extended frames (including the first extended frame, the second extended frame, and the third extended frame) are defined before the sender endpiont establishes the QUIC connection to the first network node. Therefore, in some implementations of this application, before the sender endpiont constructs the n streams streams for the target data stream through the API provided by the QUIC client, the QUIC server of the first network node may further declare that the QUIC protocol provides extended frame support by starting registration (that is, providing an interface, and triggering registration through the interface) through static configuration (for example, in a configuration file mode) or by using an application-layer protocol application. Specifically, the first network node sends a handshake packet to the sender endpiont, and the QUIC server indicates, by using whether a packet parameter, namely, a transport parameter, of the handshake packet carries a specific target identifier, whether an extended frame is supported. Then, after receiving the handshake packet sent by the first network node, the sender endpiont parses, by using the QUIC client, a related field to determine whether the QUIC server supports the extended frame, that is, determines whether the handshake packet carries the specific target identifier; and if the handshake packet carries the specific target identifier, determines that the QUIC protocol deployed on the first network node provides the extended frame support. The extended frame includes at least any one of the first extended frame, the second extended frame, and the third extended frame.

After the QUIC is successfully constructed, the sender endpiont constructes a stream through the interface provided by the QUIC client, and sets attribute information of the stream, including reliability, a priority, and a deadline. Alternatively, the QUIC client may set different attribute information for different data blocks in a same stream, as described in the method in the foregoing embodiments. Details are not described herein again.

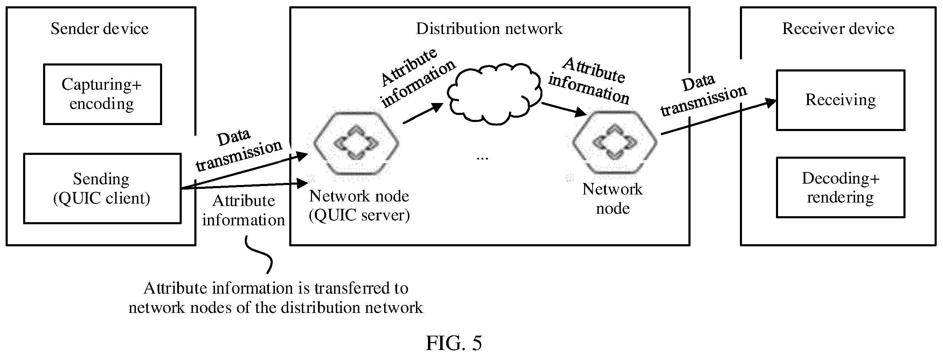

In conclusion, the transmission process of the data transmission method provided in embodiments of this application may be shown in FIG. 5. That the sender endpiont uses the extended frames (for example, first extended frame and the second extended frame) to notify a nearest node (namely, the first network node) of the distribution network of different attribute information of different streams or different attribute information of different data blocks, and the nearest node transfers the attribute information to subsequent network nodes may specifically include the following.
(1) Different attribute information, namely, the n groups of first attribute information, may be configured for different streams in a QUIC session, and the sender endpiont transfers different attribute information of different streams to the network node of the distribution network by using the first extended frame (for example, STREAM_ATTRIBUTE_FRAME, that is, STREAM_ATTRIBUTE_FRAME carries the attribute information of different streams).
(2) Different attribute information (namely, the m groups of second attribute information) may be configured for different data blocks in a same stream in a QUIC session, and the sender endpiont transfers the attribute information of different data blocks in the same stream to the network node of the distribution network by using the second extended frame (for example, BLOCK_INFO_FRAME, that is, BLOCK_INFO_FRAME carries the attribute information of different data blocks).
(3) Different attribute information may be configured for different finer-grained blocks in a same data block in a QUIC session, and the sender endpiont transfers the attribute information of different finer-grained blocks in the same data block in a same stream to the network node of the distribution network by using an additional extended frame (which may be referred to as a fourth extended frame).

The rest may be deduced by analogy. In embodiments of this application, attribute information of data at any granularity level may be obtained based on a user requirement. This operation process is similar. Details are not described herein.

The foregoing transmission mode enables the attribute information, namely, the actual attribute information, to be obtained by network nodes of the distribution network in addition to existing in the sender endpiont. The network nodes formulate respective sending policies based on the obtained attribute information. For example, each network node of the distribution network may determine the respective sending policy based on different attribute information. (1) Different cache policies may be used, based on the attribute information of the reliability level, to allocate memory. (2) Different routes (attribute information with a high priority is distributed to a cluster with a high configuration and a fast processing speed, and attribute information with a low priority is distributed to a cluster with high concurrent performance), and different sending sequences and/or bandwidth resource allocation may be used based on the attribute information of the priority. (3) Based on the attribute information of the deadline of the data block, the data block may be directly discarded after transmission expires, or the bandwidth resource and the retransmission policy (for example, the FEC and the ARQ) may be allocated with reference to the priority. In this way, different sending policies may be formulated based on the attribute information. In view of this, this implements corresponding reliability and delay assurance, and finally improves user experience.

For ease of understanding the specific implementation process of the method in the foregoing embodiments, the following further describes the foregoing method by using two specific examples.

Example 1: When performance of a streamer is watched in real time, transferred attribute information is different attribute information of different streams.

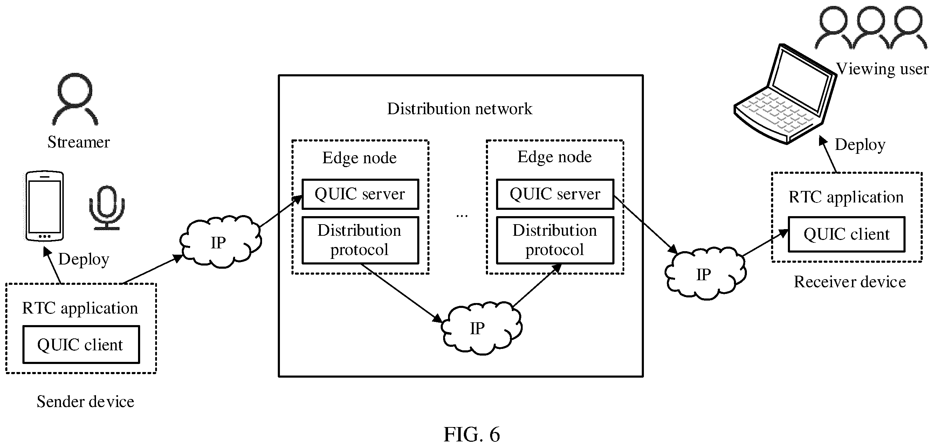

Specifically, FIG. 6 is a schematic topology diagram of an example according to an embodiment of this application. It should be noted that, before the example is implemented, a real time communication (real time communication, RTC) application (application, APP) client of a sender endpiont has supported QUIC, and the QUIC provide an interface for describing attribute information (such as a reliability level, a deadline, and a priority) of a stream; and before the example is implemented, a nearest network node (namely, an access node of the sender endpiont, which may also be referred to as an edge node) of an RTC distribution network has supported QUIC, and the QUIC may notify an application layer of attribute information of a corresponding media stream. Specifically, the following steps may be included.

Step 1: The streamer pushes an audio stream and a video stream to the edge node (which may be referred to as a first network node) of the distribution network by using an RTC application installed on the sender endpiont.

Step 2: A viewing user joins an edge node (which may be referred to as a second network node) of a nearest distribution network by using an RTC application installed on a receiver endpoint , and receives an audio and a video image.

Step 3: The RTC application at the streamer end (namely, the sender endpiont) constructes three different streams for an audio, a video I-frame, and a video P-frame through an API provided by a QUIC client. It should be noted that a quantity of constructed streams is not limited, and more or fewer streams may be constructed. For example, a stream may also be constructed for a B-frame. This is specifically determined through selection of an application at the streamer end. This is not limited in this application.

Step 4: The RTC application at the streamer end registers (that is, defines through the interface) attribute information of the audio stream through the API provided by the QUIC client, where the attribute information includes: having a highest priority (namely, a high priority) and requiring complete reliability (namely, a high reliability level).

Step 5: The RTC application at the streamer end registers attribute information of the video I-frame stream through the API provided by the QUIC client, where the attribute information includes: having a relatively high priority (namely, a medium priority), requiring semi-reliability (namely, a medium reliability level), and setting a deadline of a data block to 200 ms (200 ms is an example value).

Step 6: The RTC application at the streamer end registers attribute information of the video P-frame stream through the API provided by the QUIC client, where the attribute information includes: having a relatively low priority (namely, a low priority), requiring semi-reliability (namely, a medium reliability level), and setting a deadline of a data block to 200 ms (200 ms is an example value). It should be noted herein that a sequence of steps 5 and 6 is not limited.

Step 7: When performing sending scheduling, the QUIC client at the streamer end sends data according to a corresponding sending policy formulated based on the defined three groups of attribute information, where the sending policy is the foregoing first sending policy. It should be noted that, a rule for formulating the sending policy is agreed in advance. This means how to transmit data according to a sending policy when a data block is actually sent, and an example of the sending policy (only for example) is as follows:
a: Data with a higher priority is sent first, that is, audio>video I-frame>video P-frame. It should be noted that the data sent herein refers to data blocks belonging to a same time period (a minimum granularity for sending a data stream is a data packet, and an upper granularity is a data block, where one data block includes one or more data packets). There is a time interval between different time periods. The sending policy herein is based on the data blocks in the same time period.
b: When bandwidth resources are insufficient, the following is sequentially ensured: audio>video I-frame>video P-frame.
c: Whether time of completing sending of all I-frames or all P-frames exceeds the deadline is detected, and if yes, the I-frames or the P-frames are discarded.
d: If the I-frame is discarded, all P-frames before a next I-frame are discarded.

Step 8: The QUIC client at the streamer end transfers, to the edge node of the distribution network by using STREAM_ATTRIBUTE_FRAME, the attribute information of the streams corresponding to the audio, the video I-frame, and the video P-frame respectively. Specifically, the attribute information of the streams may be sent before the data block is sent, or may be sent by carrying the attribute information of the streams in a first data packet of a first data block.

Step 9: After receiving notified STREAM_ATTRIBUTE_FRAME, the QUIC client of the edge node of the distribution network obtains a carried signal through parsing, which includes a reliability field, a priority field, a deadline field, and the like.

Step 10: The QUIC client of the edge node of the distribution network inputs a signal to a unified signal interpretation module for interpretation to obtain final information, and feeds back the information to upper-layer processing logic (namely, a distribution logic module at the application layer).

Step 11: After receiving the notified attribute information, the upper-layer processing logic of the edge node of the distribution network sends data according to a corresponding sending policy formulated based on the defined three groups of attribute information, where the sending policy is the foregoing third sending policy. It should be noted that, a rule for formulating the sending policy is also agreed in advance. This means how to transmit data according to a sending policy when a data block is actually sent, and an example of the sending policy (only for example) is as follows:
a: Data with a higher priority is sent first.
b: When bandwidth resources are insufficient, more bandwidth resources are allocated to data with a higher priority.
c: If it is the semi-reliability and has the deadline, whether duration of completing sending of all corresponding data blocks exceeds the deadline; and if the duration exceeds the deadline, the data blocks are discarded.
d: If it is the semi-reliability and has the deadline, whether a difference between the deadline and duration of completing sending of all corresponding data blocks reaches a preset threshold is detected to determine whether transmission of the data blocks is about to expire. For example, the deadline is set to 200 ms, and the transmission duration of the data blocks is 180s. It is assumed that the preset threshold is 15 ms. That 200-180=20 is greater than 15 ms, and it is considered that the transmission of the data blocks is about to expire. If the transmission of the data block is about to expire, an FEC policy is used to ensure that no delay is caused by retransmission.
e: If it is the complete reliability or the semi-reliability, a temporary cache is locally established on the network node, and is discarded after it is determined that transmission of a data block expires or is about to expire, to release memory.
f: If it is the complete reliability, a longer deadline may be set.
g: If it is unreliability, FEC may be directly performed for one time or direct forwarding may be performed, and caching may not be performed.
h: If the priority is higher, a better distribution link (for example, a private line with a high computing capability and good network quality) may be selected; or if the priority is lower, a distribution link of a public network with a high concurrent processing capability and good network quality may be selected.

Step 12: The edge node of the distribution network continues to transfer corresponding attribute information to a subsequent node of the distribution network.

Step 13: The edge node of the distribution network establishes a mapping relationship between attribute information and a corresponding data block, and formulates a corresponding sending policy after receiving the corresponding data block. This is similar to the example in step 9. Details are not described herein. It should be noted herein that, in the example 1, a distribution protocol used for a protocol between the edge node of the distribution network and a next node of the distribution network is not the UNIC (for example, is a proprietary protocol defined by a vendor). Therefore, to learn attribute information corresponding to data blocks, a concept similar to the stream needs to be established, or identification information needs to be used for distinguishing. In other words, the mapping relationship between the attribute information and the data block needs to be established to distinguish the attribute information and the corresponding data block.

Step 14: The data block (the audio, the video I-frame, and the video P-frame) is transferred to the edge node of the distribution network accessed by the viewing user, and the edge node of the distribution network adopts a sending policy similar to that in step 9. If it is determined to continue to transfer the data block downstream, the data block is sent to a QUIC client of the receiver endpoint of the viewing user by using a QUIC server.

Step 15: After receiving data by using the QUIC client of the receiver endpoint , the viewing user uses a policy similar to that in step 9, and if it is determined to retain the data block, the RTC application attempts to play audio data and video data of the streamer after steps such as decoding and rendering are continued to be performed.

In the example 1 of this application, attribute information of data blocks in a same stream is transferred in the distribution network, and network nodes of the distribution network may formulate different sending policies based on the received attribute information. This implements corresponding reliability and delay assurance, and finally improves user experience. In the example 1, it is considered that data carried in the same stream has same attribute information.

Example 2: When performance of a streamer is watched in real time, transferred attribute information is different attribute information of different streams and different attribute information of different data blocks in a same stream.

In the example 2, attribute information at more layers is further extended based on the example 1. For example, video call data is divided into an audio and a video, and video data is divided into an I-frame and a P-frame. The audio and the video each are transmitted by using one stream. The I-frame and the P-frame of the video are transmitted in a same video stream. In the example, the attribute information is defined in advance as follows:
The audio has a higher priority than the video data, and the video I-frame has a higher priority than the P-frame. Meanings of fields are defined. priority (indicating a priority) ranges from 0 to 7, where a smaller value indicates a higher priority. For reliability (indicating a reliability level), 0 is complete reliability, 1 is unreliability, and 2 is semi-reliability. deadline (indicating a deadline) ranges from 0 to 1000, and is in milliseconds. Attribute fields carried in STREAM_ATTRIBUTE_FRAME of the audio stream (audio_stream) are priority: 1, reliability: 0, and deadline: 0. Attribute fields carried in STREAM_ATTRIBUTE_FRAME of the video stream (video_stream) are priority: 2, reliability: 0, and deadline: 200. BLOCK_INFO_FRAME newly added to video_stream is used to distinguish attributes of the I-frame and the P-frame. Attribute fields carried in BLOCK_INFO_FRAME of the I-frame are priority: 0, reliability: 2, and deadline: 200. Attribute fields carried in BLOCK_INFO_FRAME of the P-frame are priority: 1, reliability: 2, and deadline: 200.

Specifically, the following steps may be included.

Step 1: The RTC application at the streamer end constructes two streams (namely, audio_stream and video_stream) through the API provided by the QUIC client, and registers corresponding attribute information based on the foregoing schematic definition.

Step 2: When sending the video data, the RTC application at the streamer end invokes, at a granularity of the I-frame and the P-frame, the API provided by the QUIC client to send the data, and registers the attribute information of the I-frame and the P-frame.

Step 3: When performing sending scheduling, the QUIC client at the streamer end formulates a corresponding sending policy based on the attribute information registered in step 1 and step 2. It should be noted that, a rule for formulating the sending policy is agreed in advance. This means how to transmit data according to a sending policy when a data block is actually sent, and an example of the sending policy (only for example) is as follows:
a: Each time a sending opportunity is obtained, audio_stream is sent first, and then video_stream data is sent.
b: When the vedio_stream data is sent, the I-frame data is sent first, and then the P-frame data is sent.

Step 4: The QUIC client at the streamer end transfers the attribute information of audio_stream/video_stream to the edge node of the distribution network by using STREAM_ATTRIBUTE_FRAME.

Step 5: The QUIC client at the streamer end transfers the attribute information of the I-frame and the P-frame to the edge node of the distribution network by using BLOCK_INFO_FRAME.

Step 6: The QUIC server of the edge node of the distribution network inputs two types of frame signals to the interpretation module after receiving STREAM_ATTRIBUTE_FRAME and BLOCK_INFO_FRAME.

Step 7: audio_stream has only STREAM_ATTRIBUTE_FRAME. All data in this stream has same attribute information, that is, priority: 1, reliability: 0, and deadline: 0.

Step 8: When video_stream includes STREAM_ATTRIBUTE_FRAME and BLOCK_INFO_FRAME, video_stream has two types of attribute information. A hierarchical attribute information interpretation policy is as follows:
prioriy: stream_prioriy+block_prioriy, where a maximum value is 7;
reliability: block_prioriy;
deadline: block_deadline;
attributes of a data block corresponding to the I-frame: priority: 2 (2+0), reliability: 2, and deadline: 200; and
attributes of a data block corresponding to the P-frame: priority: 3 (2+1), reliability: 2, and deadline: 200.

Step 9: The interpretation module feeds back final information to the upper-layer processing logic.

Step 10: After receiving the notified attribute information, the upper-layer processing logic of the edge node of the distribution network formulates a corresponding sending policy. The following is an example.
a: Data with a higher priority is sent first.
b: When bandwidth resources are insufficient, more bandwidth resources are allocated to data with a higher priority.
c: If it is the semi-reliability and has the deadline, whether duration of completing sending of all corresponding data blocks exceeds the deadline; and if the duration exceeds the deadline, the data blocks are discarded.
d: If it is the semi-reliability and has the deadline, whether a difference between the deadline and duration of completing sending of all corresponding data blocks reaches a preset threshold is detected to determine whether transmission of the data blocks is about to expire. For example, the deadline is set to 200 ms, and the transmission duration of the data blocks is 180s. It is assumed that the preset threshold is 15 ms. That 200-180=20 is greater than 15 ms, and it is considered that the transmission of the data blocks is about to expire. If the transmission of the data block is about to expire, an FEC policy is used to ensure that no delay is caused by retransmission.
e: If it is the complete reliability or the semi-reliability, a temporary cache is locally established on the network node, and is discarded after it is determined that transmission of a data block expires or is about to expire, to release memory.
f: If it is the complete reliability, a longer deadline may be set.
g: If it is unreliability, FEC may be directly performed for one time or direct forwarding may be performed, and caching may not be performed.
h: If the priority is higher, a better distribution link (for example, a private line with a high computing capability and good network quality) may be selected; or if the priority is lower, a distribution link of a public network with a high concurrent processing capability and good network quality may be selected.

Step 11: The edge node of the distribution network continues to transfer corresponding attribute information to a subsequent node of the distribution network.

Step 12: The edge node of the distribution network establishes a mapping relationship between attribute information and a corresponding data block, and formulates a corresponding sending policy after receiving the corresponding data block. This is similar to the example in step 5. Details are not described herein.

Step 13: The data block is transferred to the edge node of the distribution network accessed by the viewing user, and the edge node of the distribution network adopts a sending policy similar to that in step 5. If it is determined to continue to transfer the data block downstream, the data block is sent to a QUIC client of the receiver endpoint of the viewing user by using a QUIC server.

Step 14: After receiving data by using the QUIC client of the receiver endpoint , the viewing user uses a policy similar to that in step 5, and if it is determined to retain the data block, steps such as decoding and rendering are continued to be performed.

In the example 2 of this application, attribute information of different data blocks in a same stream is transferred in the distribution network, and network nodes of the distribution network may formulate different sending policies based on the received attribute information. This implements corresponding reliability and delay assurance, and finally improves user experience. In the example 2, it is considered that different data blocks in a same stream may alternatively have different attribute information. In addition, different finer-grained blocks in a same data block may also have different attribute information. A process is similar to the foregoing process. This is not illustrated this time.

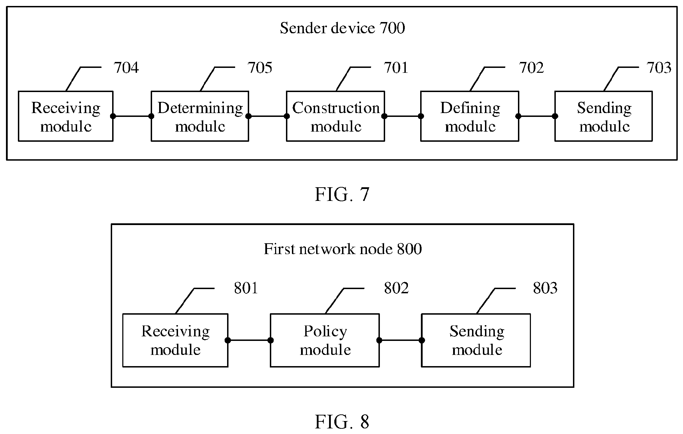

According to embodiments corresponding to FIG. 3 to FIG. 6, to better implement the solutions in embodiments of this application, the following further provides related devices configured to implement the foregoing solutions. Specifically, FIG. 7 is a schematic diagram of a structure of a sender endpiont according to an embodiment of this application. The sender endpiont may specifically include a construction module 701, a defining module 702, and a sending module 703. The construction module 701 is configured to: when the sender endpiont establishes quick UDP Internet connections QUIC to a first network node of a distribution network, construct n streams streams for a target data stream, where n≥1. The defining module 702 is configured to: define attribute information for each of the n streams to obtain n groups of first attribute information, and determine a first sending policy of the n streams based on the n groups of first attribute information. One group of first attribute information corresponds to one stream, and each group of first attribute information includes at least one piece of attribute information. The sending module 703 is configured to send the n groups of first attribute information to the first network node by using a first extended frame to enable the first network node to transfer the n groups of first attribute information to a next-hop node, where the first extended frame is a frame obtained by performing protocol extension on a QUIC-compliant frame. The sending module 703 is further configured to send the n streams to the first network node according to the first sending policy.

In the foregoing implementations of this application, protocol extension is performed on the existing QUIC protocol to obtain the first extended frame, and respective attribute information of different streams is transferred by using the first extended frame. By default, data blocks transferred in a same stream have same attribute information, namely, attribute information of the stream. In this way, attribute information obtained by a network node of the distribution network is the actual attribute information of the data block, so that the attribute information of the data block can be transferred in the entire distribution network rather than only on a sender endpoint. Therefore, in an intermediate transmission phase, a sending policy executed by the network node of the distribution network based on the attribute information is more reliable. This implements corresponding reliable data transmission and delay assurance, and finally improves user experience.

In a possible design, the defining module 702 is further configured to: define attribute information for each of m data blocks corresponding to a first stream to obtain m groups of second attribute information, and determine a second sending policy of the m data blocks based on the m groups of second attribute information. The m data blocks are data blocks included in the first stream, the first stream is any one of the n streams, each group of second attribute information includes at least one piece of attribute information, and m≥1. The sending module 703 is further configured to send the m groups of second attribute information to the first network node by using a second extended frame to enable the first network node to transfer the m groups of second attribute information to the next-hop node, where the second extended frame is a frame obtained by performing protocol extension on the QUIC protocol. The sending module 703 is further configured to send the m data blocks to the first network node according to the first sending policy and the second sending policy.

In the foregoing implementations of this application, protocol extension is performed on the existing QUIC protocol to obtain the second extended frame. The second extended frame supports carrying of a reliability level of a data block, a priority of a data block, and a deadline field of a data block. The sender endpiont transfers respective attribute information of different data blocks in a same stream by using the second extended frame, in other words, different data blocks in the same stream may alternatively have different attribute information. In this way, the attribute information obtained by the network node of the distribution network is the actual attribute information of the data block, so that the attribute information of the data block can be transferred in the entire distribution network rather than only on the sender endpiont.

In a possible design, the sending module 703 is further used by the sender endpiont to send a third extended frame to the first network node. The third extended frame indicates the first network node not to send a target data block in the m data blocks to the next-hop node; and/or the third extended frame indicates the first network node to discard the target data block in the m data blocks, and the third extended frame is a frame obtained by performing protocol extension on the QUIC protocol.

In a possible design, the sender endpiont 700 further includes a receiving module 704 and a determining module 705. The receiving module 704 is configured to receive a handshake packet sent by the first network node. The determining module 705 is configured to determine, based on a target identifier carried in the handshake packet, that the QUIC protocol deployed on the first network node provides extended frame support. An extended frame includes at least any one of the first extended frame, the second extended frame, and the third extended frame.

In a possible design, the second attribute information includes at least any one of following attribute information: a priority of a data block, a reliability level of a data block, and a deadline of a data block. The priority of the data block represents importance of the data block; the reliability level of the data block represents integrity of the data block when the data block is received by a peer node; and the deadline of the data block represents allowed transmission duration when the data block is transmitted from one node to another node.

In a possible design, the first attribute information includes at least any one of following attribute information: a priority of a stream, a reliability level of a stream, and a deadline of a data block in a stream. The priority of the stream represents importance of the stream; the reliability level of the stream represents integrity of the stream when the stream is received by a peer node; and the deadline of the data block in the stream represents allowed transmission duration when the data block in the stream is transmitted from one node to another node.

It should be noted that content such as information exchange and an execution process between the modules/units in the sender endpiont 700 in the embodiment corresponding to FIG. 7 is based on a same concept as the method embodiment corresponding to FIG. 3 or FIG. 6 in this application. For specific content, refer to the description and the operation process performed by the sender endpiont in the foregoing method embodiments of this application. Details are not described herein again.

The following describes another device provided in an embodiment of this application. FIG. 8 is a schematic diagram of a structure of a first network node according to an embodiment of this application. The first network node may specifically include a receiving module 801, a policy module 802, and a sending module 803. The receiving module 801 is configured to: when a sender endpiont establishes quick UDP Internet connections QUIC to the first network node of a distribution network, receive n groups of first attribute information sent by the sender endpiont by using a first extended frame. The first extended frame is a frame obtained by performing protocol extension on a QUIC-compliant frame, the n groups of first attribute information are obtained by defining attribute information by the sender endpiont for each of n streams streams, the n streams are constructed by the sender endpiont for a target data stream, one group of first attribute information corresponds to one stream, each group of first attribute information includes at least one piece of attribute information, and n≥1. The receiving module 801 is further configured to receive the n streams sent by the sender endpiont. The n streams are sent by the sender endpiont according to a first sending policy, and the first sending policy is determined by the sender endpiont based on the n groups of first attribute information. The policy module 802 is configured to: determine a third sending policy of the n streams based on the n groups of first attribute information, and send the n streams to a next-hop node according to the third sending policy. The sending module 803 is configured to transfer the n groups of first attribute information to the next-hop node.

In the foregoing implementations of this application, protocol extension is performed on the existing QUIC protocol to obtain the first extended frame, and respective attribute information of different streams is transferred by using the first extended frame. By default, data blocks transferred in a same stream have same attribute information, namely, attribute information of the stream. In this way, attribute information obtained by a network node of the distribution network is the actual attribute information of the data block, so that the attribute information of the data block can be transferred in the entire distribution network rather than only on a sender endpoint. Therefore, in an intermediate transmission phase, a sending policy executed by the network node of the distribution network based on the attribute information is more reliable. This implements corresponding reliable data transmission and delay assurance, and finally improves user experience.

In a possible design, the receiving module 801 is further configured to: receive m groups of second attribute information sent by the sender endpiont by using a second extended frame, where the second extended frame is a frame obtained by performing protocol extension on the QUIC protocol, the m groups of second attribute information are obtained by defining attribute information by the sender endpiont for each of m data blocks corresponding to a first stream, the m data blocks are data blocks included in the first stream, the first stream is any one of the n streams, each group of second attribute information includes at least one piece of attribute information, and m>1; and receive the m data blocks sent by the sender endpiont, where the m data blocks are sent by the sender endpiont according to a second sending policy, and the second sending policy is determined by the sender endpiont based on the m groups of second attribute information. The sending module 803 is further configured to transfer the m groups of second attribute information to the next-hop node.

In the foregoing implementations of this application, protocol extension is performed on the existing QUIC protocol to obtain the second extended frame. The second extended frame supports carrying of a reliability level of a data block, a priority of a data block, and a deadline field of a data block. The sender endpiont transfers respective attribute information of different data blocks in a same stream by using the second extended frame, in other words, different data blocks in the same stream may alternatively have different attribute information. In this way, the attribute information obtained by the network node of the distribution network is the actual attribute information of the data block, so that the attribute information of the data block can be transferred in the entire distribution network rather than only on the sender endpiont.

In a possible design, the receiving module 801 is further configured to: receive a third extended frame sent by the sender endpiont, where the third extended frame is a frame obtained by performing protocol extension on the QUIC protocol; and not send a target data block in the m data blocks to the next-hop node by using the third extended frame; and/or discard the target data block in the m data blocks by using the third extended frame.

In a possible design, the sending module 803 is further configured to send a handshake packet to the sender endpiont. The handshake packet carries a target identifier, the target identifier represents that the QUIC protocol of the first network node provides extended frame support, and an extended frame includes at least any one of the first extended frame, the second extended frame, and the third extended frame.

In a possible design, the second attribute information includes at least any one of following attribute information: a priority of a data block, a reliability level of a data block, and a deadline of a data block. The priority of the data block represents importance of the data block; the reliability level of the data block represents integrity of the data block when the data block is received by a peer node; and the deadline of the data block represents allowed transmission duration when the data block is transmitted from one node to another node.

In a possible design, the first attribute information includes at least any one of following attribute information: a priority of a stream, a reliability level of a stream, and a deadline of a data block in a stream. The priority of the stream represents importance of the stream; the reliability level of the stream represents integrity of the stream when the stream is received by a peer node; and the deadline of the data block in the stream represents allowed transmission duration when the data block in the stream is transmitted from one node to another node.

It should be noted that content such as information exchange and an execution process between the modules/units in the first network node 800 in the embodiment corresponding to FIG. 8 is based on a same concept as the method embodiment corresponding to FIG. 3 or FIG. 6 in this application. For specific content, refer to the description and the operation process performed by the first network node in the foregoing method embodiments of this application. Details are not described herein again.

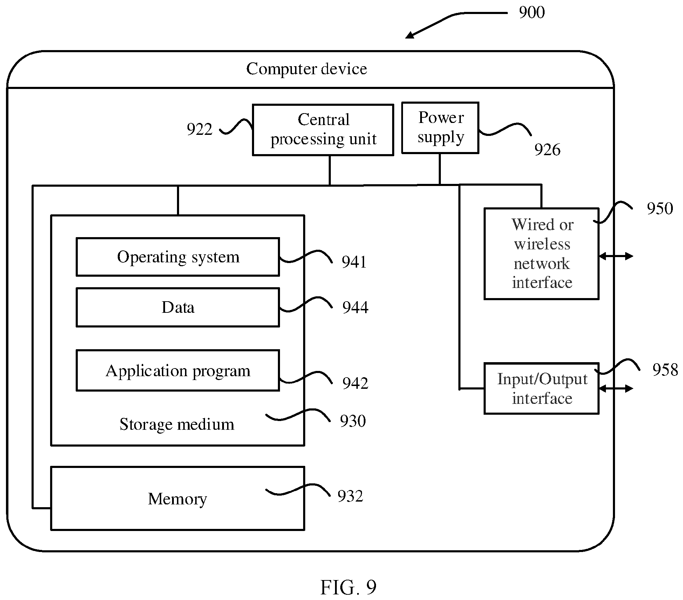

The following describes a computer device according to an embodiment of this application. FIG. 9 is a schematic diagram of a structure of a computer device according to an embodiment of this application. The computer device 900 may be the sender endpiont according to this application, or may be the first network node according to this application. When the computer device 900 is the sender endpiont, the module described in the embodiment corresponding to FIG. 7 may be deployed on the computer device 900, and is configured to implement the function of the sender endpiont 700 in the embodiment corresponding to FIG. 7. When the computer device 900 is the first network node, the module described in the embodiment corresponding to FIG. 8 may be deployed on the computer device 900, and is configured to implement the function of the first network node 800 in the embodiment corresponding to FIG. 8. The computer device 900 is implemented by one or more servers. The computer device 900 may vary greatly due to different configurations or performance, and may include one or more central processing units (central processing unit, CPU) 922 (for example, one or more central processing units) and a memory 932, and one or more storage media 930 (for example, one or more mass storage devices) that store an application program 942 or data 944. The memory 932 and the storage medium 930 may be transitory storage or persistent storage. The program stored in the storage medium 930 may include one or more modules (not shown in the figure), and each module may include a series of instruction operations for the computer device 900. Further, the central processing unit 922 may be configured to: communicate with the storage medium 930, and perform, on the computer device 900, the series of instruction operations in the storage medium 930.

The computer device 900 may further include one or more power supplies 926, one or more wired or wireless network interfaces 950, one or more input/output interfaces 958, and/or one or more operating systems 941 such as Windows ServerTM, Mac OS XTM, UnixTM, LinuxTM, and FreeBSDTM.

In an embodiment of this application, when the computer device 900 is the sender endpiont, the computer device 900 is used as the sender endpiont, and may be configured to perform the step performed by the sender endpiont in the embodiment corresponding to FIG. 3 or FIG. 6. For example, the central processing unit 922 may be configured to: after a QUIC connection is established between the sender endpiont and a first network node of a distribution network, construct n streams for a to-be-sent target data stream on the sender endpiont, where n≥1, and a specific value of n may be self-defined. This is not specifically limited herein. After constructing the n streams for the to-be-sent target data stream, the central processing unit 922 further defines attribute information for each of the n streams to obtain n groups of attribute information (which may be referred to as first attribute information), where one group of first attribute information corresponds to one stream. For example, it is assumed that the sender endpiont constructes four streams through an API. Correspondingly, four groups of first attribute information need to be defined, and one stream has one group of first attribute information. It should be noted herein that each group of first attribute information includes at least one piece of attribute information. Further, the n groups of first attribute information are sent to the first network node. It should be noted herein that the first attribute information is sent to the first network node is implemented by using a pre-defined extended frame (which may be referred to as a first extended frame), and the first extended frame is a frame obtained by performing protocol extension on a QUIC-compliant frame. In addition, after a first sending policy is determined based on the n groups of first attribute information, the n streams are sent to a QUIC server of the first network node according to the first sending policy.

The central processing unit 922 is configured to perform any step performed by the sender endpiont in the embodiment corresponding to FIG. 3 or FIG. 6. For specific content, refer to the descriptions in the method embodiments described above in this application. Details are not described herein again.

In some other embodiments of this application, when the computer device 900 is the first network node, the computer device 900 may be configured to perform the step performed by the first network node in the embodiment corresponding to FIG. 3 or FIG. 6. For example, the central processing unit 922 may be configured to: after receiving n groups of first attribute information sent by a sender endpiont, notify an application layer (for example, a distribution logic module) of a first network node of the n groups of first attribute information. After receiving the n groups of first attribute information, the application layer of the first network node determines a sending policy (which may also be referred to as a third sending policy) of n streams, and continues to send the received n streams to a next-hop node according to the third sending policy. In addition, the received n groups of first attribute information may also be continued to be transferred to the next-hop node. In this way, the next-hop node (it is assumed that the next-hop node is not a receiver node) continues to determine a sending policy (which may be referred to as a fourth sending policy) of the n streams based on the n groups of first attribute information, and continues to send the n streams to another next-hop node according to the fourth sending policy.

The central processing unit 922 is configured to perform any step performed by the first network node in the embodiment corresponding to FIG. 3 or FIG. 6. For specific content, refer to the descriptions in the method embodiments described above in this application. Details are not described herein again.

An embodiment of this application further provides a computer-readable storage medium. The computer-readable storage medium stores a program for signal processing. When the program is run on a computer, the computer is enabled to perform the steps performed by the computer device in the descriptions of the foregoing embodiments.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all of the modules may be selected based on an actual requirement to achieve the objectives of the solutions of embodiments. In addition, in the accompanying drawings of the apparatus embodiments provided in this application, connection relationships between the modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function performed by a computer program can be easily implemented by using corresponding hardware, and a specific hardware structure used to achieve a same function may be of various forms, for example, in a form of an analog circuit, a digital circuit, a dedicated circuit, or the like. However, in this application, a software program implementation is a better implementation in most cases. Based on such an understanding, technical solutions of this application essentially or a part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a training device, a network device, or the like) to perform the methods described in embodiments of this application.

All or some of foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state disk, SSD)), or the like.

## Claims

1. A data transmission method, comprising:
when a sender endpoint establishes quick UDP Internet connections, QUIC, to a first network node of a distribution network, constructing, by the sender endpoint, n streams for a target data stream, wherein n≥1;
defining, by the sender endpoint, attribute information for each of the n streams to obtain n groups of first attribute information, and determining a first sending policy of the n streams based on the n groups of first attribute information;
sending, by the sender endpoint, the n groups of first attribute information to the first network node by using a first extended frame to enable the first network node to transfer the n groups of first attribute information to a next-hop node, wherein the first extended frame is a frame obtained by performing protocol extension on a QUIC-compliant frame; and
sending, by the sender endpoint, the n streams to the first network node according to the first sending policy.

2. The method according to claim 1, wherein before the sending, by the sender endpoint, the n streams to the first network node according to the first sending policy, the method further comprises:
defining, by the sender endpoint, attribute information for each of m data blocks corresponding to a first stream to obtain m groups of second attribute information, and determining a second sending policy of the m data blocks based on the m groups of second attribute information, wherein the m data blocks are data blocks comprised in the first stream, the first stream is any one of the n streams, and m≥1; and
sending, by the sender endpoint, the m groups of second attribute information to the first network node by using a second extended frame to enable the first network node to transfer the m groups of second attribute information to the next-hop node, wherein the second extended frame is a frame obtained by performing protocol extension on the QUIC protocol; and
the sending, by the sender endpoint, the n streams to the first network node according to the first sending policy comprises:
sending, by the sender endpoint, the m data blocks to the first network node according to the first sending policy and the second sending policy.

3. The method according to claim 2, wherein the method further comprises:
sending, by the sender endpoint, a third extended frame to the first network node, wherein the third extended frame indicates the first network node not to send a target data block in the m data blocks to the next-hop node; and/or the third extended frame indicates the first network node to discard the target data block in the m data blocks, and the third extended frame is a frame obtained by performing protocol extension on the QUIC protocol.

4. The method according to any one of claims 1 to 3, wherein before the constructing, by the sender endpoint, n streams for a target data stream, the method further comprises:
receiving, by the sender endpoint, a handshake packet sent by the first network node; and
determining, by the sender endpoint based on a target identifier carried in the handshake packet, that the QUIC protocol deployed on the first network node provides extended frame support, wherein an extended frame comprises at least any one of the first extended frame, the second extended frame, or the third extended frame.

5. The method according to any one of claims 2 to 4, wherein the second attribute information comprises at least any one of following attribute information:
a priority of a data block, a reliability level of a data block, and a deadline of a data block,
wherein
the priority of the data block represents importance of the data block;
the reliability level of the data block represents integrity of the data block when the data block is received by a peer node; and
the deadline of the data block represents allowed transmission duration when the data block is transmitted from one node to another node.

6. The method according to any one of claims 1 to 5, wherein the first attribute information comprises at least any one of following attribute information:
a priority of a stream, a reliability level of a stream, and a deadline of a data block in a stream,
wherein
the priority of the stream represents importance of the stream;
the reliability level of the stream represents integrity of the stream when the stream is received by a peer node; and
the deadline of the data block in the stream represents allowed transmission duration when the data block in the stream is transmitted from one node to another node.

7. A data transmission method, comprising:
when a sender endpoint establishes quick UDP Internet connections, QUIC, to a first network node of a distribution network, receiving, by the first network node, n groups of first attribute information sent by the sender endpoint by using a first extended frame, wherein the first extended frame is a frame obtained by performing protocol extension on a QUIC-compliant frame, the n groups of first attribute information are obtained by defining attribute information by the sender endpoint for each of n streams streams, the n streams are constructed by the sender endpoint for a target data stream, one group of first attribute information corresponds to one stream, and n≥1;
receiving, by the first network node, the n streams sent by the sender endpoint, wherein the n streams are sent by the sender endpoint according to a first sending policy, and the first sending policy is determined by the sender endpoint based on the n groups of first attribute information;
determining, by the first network node, a third sending policy of the n streams based on the n groups of first attribute information, and sending the n streams to a next-hop node according to the third sending policy; and
transferring, by the first network node, the n groups of first attribute information to the next-hop node.

8. The method according to claim 7, wherein before the receiving, by the first network node, the n streams sent by the sender endpoint, the method further comprises:
receiving, by the first network node, m groups of second attribute information sent by the sender endpoint by using a second extended frame, wherein the second extended frame is a frame obtained by performing protocol extension on the QUIC protocol, the m groups of second attribute information are obtained by defining attribute information by the sender endpoint for each of m data blocks corresponding to a first stream, the m data blocks are data blocks comprised in the first stream, the first stream is any one of the n streams, and m≥1;
receiving, by the first network node, the m data blocks sent by the sender endpoint, wherein the m data blocks are sent by the sender endpoint according to the first sending policy and a second sending policy, and the second sending policy is determined by the sender endpoint based on the m groups of second attribute information; and
transferring, by the first network node, the m groups of second attribute information to the next-hop node.

9. The method according to claim 8, wherein the method further comprises:
receiving, by the first network node, a third extended frame sent by the sender endpoint, wherein the third extended frame is a frame obtained by performing protocol extension on the QUIC protocol; and
skipping, by the first network node, sending a target data block in the m data blocks to the next-hop node by using the third extended frame; and/or
discarding, by the first network node, the target data block in the m data blocks by using the third extended frame.

10. The method according to any one of claims 7 to 9, wherein before the receiving, by the first network node, n groups of first attribute information sent by the sender endpoint by using a first extended frame, the method further comprises:
sending, by the first network node, a handshake packet to the sender endpoint, wherein the handshake packet carries a target identifier, the target identifier represents that the QUIC protocol of the first network node provides extended frame support, and an extended frame comprises at least any one of the first extended frame, the second extended frame, or the third extended frame.

11. The method according to any one of claims 8 to 10, wherein the second attribute information comprises at least any one of following attribute information:
a priority of a data block, a reliability level of a data block, and a deadline of a data block,
wherein
the priority of the data block represents importance of the data block;
the reliability level of the data block represents integrity of the data block when the data block is received by a peer node; and
the deadline of the data block represents allowed transmission duration when the data block is transmitted from one node to another node.

12. The method according to any one of claims 7 to 11, wherein the first attribute information comprises at least any one of following attribute information:
a priority of a stream, a reliability level of a stream, and a deadline of a data block in a stream,
wherein
the priority of the stream represents importance of the stream;
the reliability level of the stream represents integrity of the stream when the stream is received by a peer node; and
the deadline of the data block in the stream represents allowed transmission duration when the data block in the stream is transmitted from one node to another node.

13. A computer device, comprising a processor and a memory, wherein the processor is coupled to the memory;
the memory is configured to store a program; and
the processor is configured to execute the program in the memory to enable the computer device to perform the method according to any one of claims 1 to 12.

14. A computer-readable storage medium, comprising a program, wherein when the program is run on a computer, the computer is enabled to perform the method according to any one of claims 1 to 12.

15. A computer program product comprising instructions, wherein when the computer program product runs on a computer, the computer is enabled to perform the method according to any one of claims 1 to 12.

## Patentansprüche

1. Datenübertragungsverfahren, umfassend:
wenn ein Absenderendpunkt schnelle UDP-Internetverbindungen, QUIC, zu einem ersten Netzwerkknoten eines Verteilungsnetzwerks herstellt, Erstellen von n Strömen für einen Zieldatenstrom durch den Absenderendpunkt, wobei n ≥ 1;
Definieren von Attributinformationen für jeden der n Ströme durch den Absenderendpunkt, um n Gruppen von ersten Attributinformationen zu erlangen, und Bestimmen einer ersten Senderichtlinie für die n Ströme basierend auf den n Gruppen von ersten Attributinformationen;
Senden der n Gruppen von ersten Attributinformationen durch den Absenderendpunkt an den ersten Netzwerkknoten unter Verwendung eines ersten erweiterten Frames, um dem ersten Netzwerkknoten das Übertragen der n Gruppen von ersten Attributinformationen an einen nächsten Hop-Knoten zu ermöglichen, wobei der erste erweiterte Frame ein Frame ist, der durch Durchführen einer Protokollerweiterung an einem QUIC-kompatiblen Frame erlangt wird; und
Senden der n Ströme durch den Absenderendpunkt an den ersten Netzwerkknoten gemäß der ersten Senderichtlinie.

2. Verfahren nach Anspruch 1, wobei das Verfahren vor dem Senden der n Ströme durch den Absenderendpunkt zu dem ersten Netzwerkknoten gemäß der ersten Senderichtlinie ferner Folgendes umfasst:
Definieren von Attributinformationen durch den Absenderendpunkt für jeden von m Datenblöcken entsprechend einem ersten Strom, um m Gruppen von zweiten Attributinformationen zu erlangen, und Bestimmen einer zweiten Senderichtlinie der m Datenblöcke basierend auf den m Gruppen von zweiten Attributinformationen, wobei die m Datenblöcke in dem ersten Strom enthaltene Datenblöcke sind, der erste Strom ein beliebiger der n Ströme ist und m ≥ 1; und
Senden der m Gruppen von zweiten Attributinformationen durch den Absenderendpunkt an den ersten Netzwerkknoten unter Verwendung eines zweiten erweiterten Frames, um dem ersten Netzwerkknoten das Übertragen der m Gruppen von zweiten Attributinformationen an den nächsten Hop-Knoten zu ermöglichen, wobei der zweite erweiterte Frame ein Frame ist, der durch Durchführen einer Protokollerweiterung des QUIC-Protokolls erlangt wird; und
das Senden der n Ströme durch den Absenderendpunkt an den ersten Netzwerkknoten gemäß der ersten Senderichtlinie Folgendes umfasst:
Senden der m Datenblöcke durch den Absenderendpunkt an den ersten Netzwerkknoten gemäß der ersten Senderichtlinie und der zweiten Senderichtlinie.

3. Verfahren nach Anspruch 2, wobei das Verfahren ferner Folgendes umfasst:
Senden eines dritten erweiterten Frames durch den Absenderendpunkt an den ersten Netzwerkknoten, wobei der dritte erweiterte Frame dem ersten Netzwerkknoten anzeigt, keinen Zieldatenblock in den m Datenblöcken an den nächsten Hop-Knoten zu senden; und/oder der dritte erweiterte Frame dem ersten Netzwerkknoten anzeigt, den Zieldatenblock in den m Datenblöcken zu verwerfen, und der dritte erweiterte Frame ein Frame ist, der durch Durchführen einer Protokollerweiterung an dem QUIC-Protokoll erlangt wird.

4. Verfahren nach einem der Ansprüche 1 bis 3, wobei das Verfahren vor dem Erstellen von n Strömen für einen Zieldatenstrom durch den Absenderendpunkt ferner Folgendes umfasst:
Empfangen eines durch den ersten Netzwerkknoten gesendeten Handshake-Pakets durch den Absenderendpunkt; und
Bestimmen durch den Absenderendpunkt basierend auf einer in dem Handshake-Paket enthaltenen Zielkennung, dass das auf dem ersten Netzwerkknoten eingesetzte QUIC-Protokoll eine erweiterte Frame-Unterstützung bereitstellt, wobei ein erweiterter Frame mindestens einen beliebigen des ersten erweiterten Frames, des zweiten erweiterten Frames oder des dritten erweiterten Frames umfasst.

5. Verfahren nach einem der Ansprüche 2 bis 4, wobei die zweiten Attributinformationen mindestens eine beliebige der folgenden Attributinformationen umfassen:
eine Priorität eines Datenblocks, ein Zuverlässigkeitsniveau eines Datenblocks und eine Frist eines Datenblocks, wobei
die Priorität des Datenblocks eine Bedeutung des Datenblocks darstellt;
das Zuverlässigkeitsniveau des Datenblocks eine Integrität des Datenblocks darstellt, wenn der Datenblock durch einen Peer-Knoten empfangen wird; und
die Frist des Datenblocks eine zulässige Übertragungsdauer darstellt, wenn der Datenblock von einem Knoten zu einem anderen Knoten übertragen wird.

6. Verfahren nach einem der Ansprüche 1 bis 5, wobei die ersten Attributinformationen mindestens eine beliebige der folgenden Attributinformationen umfassen:
eine Priorität eines Stroms, ein Zuverlässigkeitsniveau eines Stroms und eine Frist eines Datenblocks in einem Strom, wobei die Priorität des Stroms eine Bedeutung des Stroms darstellt;
das Zuverlässigkeitsniveau des Stroms eine Integrität des Stroms darstellt, wenn der Strom durch einen Peer-Knoten empfangen wird; und
die Frist des Datenblocks in dem Strom eine zulässige Übertragungsdauer darstellt, wenn der Datenblock in dem Strom von einem Knoten zu einem anderen Knoten übertragen wird.

7. Datenübertragungsverfahren, umfassend:
wenn ein Absenderendpunkt schnelle UDP-Internetverbindungen, QUIC, zu einem ersten Netzwerkknoten eines Verteilungsnetzwerks herstellt, Empfangen von n Gruppen von ersten Attributinformationen, die durch den Absenderendpunkt unter Verwendung eines ersten erweiterten Frames gesendet werden, durch den ersten Netzwerkknoten, wobei der erste erweiterte Frame ein Frame ist, der durch Durchführen einer Protokollerweiterung an einem QUIC-kompatiblen Frame erlangt wird, die n Gruppen von ersten Attributinformationen durch Definieren von Attributinformationen durch den Absenderendpunkt für jeden der n Ströme erlangt werden, die n Ströme durch den Absenderendpunkt für einen Zieldatenstrom erstellt werden, eine Gruppe von ersten Attributinformationen einem Strom entspricht und n ≥ 1;
Empfangen der n Ströme, die durch den Absenderendpunkt gesendet werden, durch den ersten Netzwerkknoten, wobei die n Ströme durch den Absenderendpunkt gemäß einer ersten Senderichtlinie gesendet werden und die erste Senderichtlinie durch den Absenderendpunkt basierend auf den n Gruppen von ersten Attributinformationen bestimmt wird;
Bestimmen einer dritten Senderichtlinie der n Ströme durch den ersten Netzwerkknoten basierend auf den n Gruppen von ersten Attributinformationen und Senden der n Ströme an einen nächsten Hop-Knoten gemäß der dritten Senderichtlinie; und
Übertragen der n Gruppen von ersten Attributinformationen durch den ersten Netzwerkknoten an den nächsten Hop-Knoten.

8. Verfahren nach Anspruch 7, wobei das Verfahren vor dem Empfangen der n Ströme, die durch den Absenderendpunkt gesendet werden, durch den ersten Netzwerkknoten ferner Folgendes umfasst:
Empfangen von m Gruppen von zweiten Attributinformationen, die durch den Absenderendpunkt unter Verwendung eines zweiten erweiterten Frames gesendet wurden, durch den ersten Netzwerkknoten, wobei der zweite erweiterte Frame ein Frame ist, der durch Durchführen einer Protokollerweiterung an dem QUIC-Protokoll erlangt wird, die m Gruppen von zweiten Attributinformationen durch Definieren von Attributinformationen durch den Absenderendpunkt für jeden der m Datenblöcke entsprechend einem ersten Strom erlangt werden, die m Datenblöcke Datenblöcke sind, die in dem ersten Strom enthalten sind, der erste Strom ein beliebiger der n Ströme ist und m ≥ 1;
Empfangen der m Datenblöcke, die durch den Absenderendpunkt gesendet werden, durch den ersten Netzwerkknoten, wobei die m Datenblöcke durch den Absenderendpunkt gemäß der ersten Senderichtlinie und einer zweiten Senderichtlinie gesendet werden und die zweite Senderichtlinie durch den Absenderendpunkt basierend auf den m Gruppen von zweiten Attributinformationen bestimmt wird; und
Übertragen der m Gruppen von zweiten Attributinformationen durch den ersten Netzwerkknoten an den nächsten Hop-Knoten.

9. Verfahren nach Anspruch 8, wobei das Verfahren ferner Folgendes umfasst:
Empfangen eines dritten erweiterten Frames, der durch den Absenderendpunkt gesendet wurde, durch den ersten Netzwerkknoten, wobei der dritte erweiterte Frame ein Frame ist, der durch Durchführen einer Protokollerweiterung an dem QUIC-Protokoll erlangt wird; und
Überspringen des Sendens eines Zieldatenblocks in den m Datenblöcken an den nächsten Hop-Knoten durch den ersten Netzwerkknoten unter Verwendung des dritten erweiterten Frames; und/oder
Verwerfen des Zieldatenblocks in den m Datenblöcken durch den ersten Netzwerkknoten unter Verwendung des dritten erweiterten Frames.

10. Verfahren nach einem der Ansprüche 7 bis 9, wobei das Verfahren vor dem Empfangen von n Gruppen von ersten Attributinformationen, die durch den Absenderendpunkt unter Verwendung eines ersten erweiterten Frames gesendet werden, durch den ersten Netzwerkknoten ferner Folgendes umfasst:
Senden eines Handshake-Pakets durch den ersten Netzwerkknoten an den Absenderendpunkt, wobei das Handshake-Paket eine Zielkennung enthält, die Zielkennung darstellt, dass das QUIC-Protokoll des ersten Netzwerkknotens eine erweiterte Frame-Unterstützung bereitstellt, und ein erweiterter Frame mindestens einen beliebigen des ersten erweiterten Frames, des zweiten erweiterten Frames oder des dritten erweiterten Frames umfasst.

11. Verfahren nach einem der Ansprüche 8 bis 10, wobei die zweiten Attributinformationen mindestens eine beliebige der folgenden Attributinformationen umfassen:
eine Priorität eines Datenblocks, ein Zuverlässigkeitsniveau eines Datenblocks und eine Frist eines Datenblocks, wobei
die Priorität des Datenblocks eine Bedeutung des Datenblocks darstellt;
das Zuverlässigkeitsniveau des Datenblocks eine Integrität des Datenblocks darstellt, wenn der Datenblock durch einen Peer-Knoten empfangen wird; und
die Frist des Datenblocks eine zulässige Übertragungsdauer darstellt, wenn der Datenblock von einem Knoten zu einem anderen Knoten übertragen wird.

12. Verfahren nach einem der Ansprüche 7 bis 11, wobei die ersten Attributinformationen mindestens eine beliebige der folgenden Attributinformationen umfassen:
eine Priorität eines Stroms, ein Zuverlässigkeitsniveau eines Stroms und eine Frist eines Datenblocks in einem Strom, wobei
die Priorität des Stroms eine Bedeutung des Stroms darstellt;
das Zuverlässigkeitsniveau des Stroms eine Integrität des Stroms darstellt, wenn der Strom durch einen Peer-Knoten empfangen wird; und
die Frist des Datenblocks in dem Strom eine zulässige Übertragungsdauer darstellt, wenn der Datenblock in dem Strom von einem Knoten zu einem anderen Knoten übertragen wird.

13. Computervorrichtung, umfassend einen Prozessor und einen Speicher, wobei der Prozessor mit dem Speicher gekoppelt ist;
der Speicher dazu konfiguriert ist, ein Programm zu speichern; und
der Prozessor dazu konfiguriert ist, das Programm in dem Speicher auszuführen, um der Kommunikationsvorrichtung zu ermöglichen, das Verfahren nach einem der Ansprüche 1 bis 12 durchzuführen.

14. Computerlesbares Speichermedium, umfassend ein Programm, wobei, wenn das Programm auf einem Computer ausgeführt wird, der Computer in die Lage versetzt wird, das Verfahren nach einem der Ansprüche 1 bis 12 durchzuführen.

15. Computerprogrammprodukt, umfassend Anweisungen, wobei, wenn das Computerprogrammprodukt auf einem Computer ausgeführt wird, der Computer in die Lage versetzt wird, das Verfahren nach einem der Ansprüche 1 bis 12 durchzuführen.

## Revendications

1. Procédé de transmission de données, comprenant :
lorsqu'un point de terminaison expéditeur établit des connexions Internet UDP rapides, QUIC, à un premier nœud de réseau d'un réseau de distribution, la construction, par le point de terminaison expéditeur, de n flux pour un flux de données cible, dans lequel n≥1 ;
la définition, par le point de terminaison expéditeur, d'informations d'attribut pour chacun des n flux pour obtenir n groupes de premières informations d'attribut, et la détermination d'une première politique d'envoi des n flux sur la base des n groupes de premières informations d'attribut ;
l'envoi, par le point de terminaison expéditeur, des n groupes de premières informations d'attribut au premier nœud de réseau à l'aide d'une première trame étendue pour permettre au premier nœud de réseau de transférer les n groupes de premières informations d'attribut à un nœud de saut suivant, dans lequel la première trame étendue est une trame obtenue en réalisant une extension de protocole sur une trame compatible QUIC ; et
l'envoi, par le point de terminaison expéditeur, des n flux au premier nœud de réseau selon la première politique d'envoi.

2. Procédé selon la revendication 1, dans lequel, avant l'envoi, par le point de terminaison expéditeur, des n flux au premier nœud de réseau selon la première politique d'envoi, le procédé comprend également :
la définition, par le point de terminaison expéditeur, d'informations d'attribut pour chacun des m blocs de données correspondant à un premier flux pour obtenir m groupes de secondes informations d'attribut, et la détermination d'une deuxième politique d'envoi des m blocs de données sur la base des m groupes de secondes informations d'attribut, dans lequel les m blocs de données sont des blocs de données compris dans le premier flux, le premier flux est l'un quelconque des n flux, et m ≥ 1 ; et
l'envoi, par le point de terminaison expéditeur, des m groupes de secondes informations d'attribut au premier nœud de réseau à l'aide d'une deuxième trame étendue pour permettre au premier nœud de réseau de transférer les m groupes de secondes informations d'attribut au nœud de saut suivant, dans lequel la deuxième trame étendue est une trame obtenue en réalisant une extension de protocole sur le protocole QUIC ; et
l'envoi, par le point de terminaison expéditeur, des n flux au premier nœud de réseau selon la première politique d'envoi comprend :
l'envoi, par le point de terminaison expéditeur, des m blocs de données au premier nœud de réseau selon la première politique d'envoi et la deuxième politique d'envoi.

3. Procédé selon la revendication 2, dans lequel le procédé comprend également :
l'envoi, par le point de terminaison expéditeur, d'une troisième trame étendue au premier nœud de réseau, dans lequel la troisième trame étendue indique au premier nœud de réseau de ne pas envoyer un bloc de données cible dans les m blocs de données au nœud de saut suivant ; et/ou la troisième trame étendue indique au premier nœud de réseau de rejeter le bloc de données cible dans les m blocs de données, et la troisième trame étendue est une trame obtenue en réalisant une extension de protocole sur le protocole QUIC.

4. Procédé selon l'une quelconque des revendications 1 à 3, dans lequel, avant la construction, par le point de terminaison expéditeur, de n flux pour un flux de données cible, le procédé comprend également :
la réception, par le point de terminaison expéditeur, d'un paquet de négociation envoyé par le premier nœud de réseau ; et la détermination, par le point de terminaison expéditeur sur la base d'un identifiant cible transporté dans le paquet de négociation, que le protocole QUIC déployé sur le premier nœud de réseau fournit un support de trame étendue, dans lequel une trame étendue comprend au moins l'une quelconque de la première trame étendue, de la deuxième trame étendue ou de la troisième trame étendue.

5. Procédé selon l'une quelconque des revendications 2 à 4, dans lequel les secondes informations d'attribut comprennent au moins l'une quelconque des informations d'attribut suivantes :
une priorité d'un bloc de données, un niveau de fiabilité d'un bloc de données et une date limite d'un bloc de données, dans lequel
la priorité du bloc de données représente l'importance du bloc de données ;
le niveau de fiabilité du bloc de données représente l'intégrité du bloc de données lorsque le bloc de données est reçu par un nœud homologue ; et
la date limite du bloc de données représente la durée de transmission autorisée lorsque le bloc de données est transmis d'un nœud à un autre nœud.

6. Procédé selon l'une quelconque des revendications 1 à 5, dans lequel les premières informations d'attribut comprennent au moins l'une quelconque des informations d'attribut suivantes :
une priorité d'un flux, un niveau de fiabilité d'un flux et une date limite d'un bloc de données dans un flux, dans lequel la priorité du flux représente l'importance du flux ;
le niveau de fiabilité du flux représente l'intégrité du flux lorsque le flux est reçu par un nœud homologue ; et
la date limite du bloc de données dans le flux représente la durée de transmission autorisée lorsque le bloc de données dans le flux est transmis d'un nœud à un autre nœud.

7. Procédé de transmission de données, comprenant :
lorsqu'un point de terminaison expéditeur établit des connexions Internet UDP rapides, QUIC, à un premier nœud de réseau d'un réseau de distribution, la réception, par le premier nœud de réseau, de n groupes de premières informations d'attribut envoyées par le point de terminaison expéditeur à l'aide d'une première trame étendue, dans lequel la première trame étendue est une trame obtenue en réalisant une extension de protocole sur une trame compatible QUIC, les n groupes de premières informations d'attribut sont obtenus en définissant des informations d'attribut par le point de terminaison expéditeur pour chacun des n flux flux, les n flux sont construits par le point de terminaison expéditeur pour un flux de données cible, un groupe de premières informations d'attribut correspond à un flux, et n≥1 ;
la réception, par le premier nœud de réseau, des n flux envoyés par le point de terminaison expéditeur, dans lequel les n flux sont envoyés par le point de terminaison expéditeur selon une première politique d'envoi, et la première politique d'envoi est déterminée par le point de terminaison expéditeur sur la base des n groupes de premières informations d'attribut ;
la détermination, par le premier nœud de réseau, d'une troisième politique d'envoi des n flux sur la base des n groupes de premières informations d'attribut, et l'envoi des n flux à un nœud de saut suivant selon la troisième politique d'envoi ; et
le transfert, par le premier nœud de réseau, des n groupes de premières informations d'attribut au nœud de saut suivant.

8. Procédé selon la revendication 7, dans lequel, avant la réception, par le premier nœud de réseau, des n flux envoyés par le point de terminaison expéditeur, le procédé comprend également :
la réception, par le premier nœud de réseau, de m groupes de secondes informations d'attribut envoyées par le point de terminaison expéditeur à l'aide d'une deuxième trame étendue,
dans lequel la deuxième trame étendue est une trame obtenue en réalisant une extension de protocole sur le protocole QUIC, les m groupes de secondes informations d'attribut sont obtenus en définissant des informations d'attribut par le point de terminaison expéditeur pour chacun des m blocs de données correspondant à un premier flux, les m blocs de données sont des blocs de données compris dans le premier flux, le premier flux est l'un quelconque des n flux, et m≥1 ;
la réception, par le premier nœud de réseau, des m blocs de données envoyés par le point de terminaison expéditeur, dans lequel les m blocs de données sont envoyés par le point de terminaison expéditeur selon la première politique d'envoi et une deuxième politique d'envoi, et la deuxième politique d'envoi est déterminée par le point de terminaison expéditeur sur la base des m groupes de secondes informations d'attribut ; et
le transfert, par le premier nœud de réseau, des m groupes de secondes informations d'attribut au nœud de saut suivant.

9. Procédé selon la revendication 8, dans lequel le procédé comprend également :
la réception, par le premier nœud de réseau, d'une troisième trame étendue envoyée par le point de terminaison expéditeur, dans lequel la troisième trame étendue est une trame obtenue en réalisant une extension de protocole sur le protocole QUIC ; et
le saut, par le premier nœud de réseau, de l'envoi d'un bloc de données cible dans les m blocs de données au nœud de saut suivant à l'aide de la troisième trame étendue ; et/ou
le rejet, par le premier nœud de réseau, du bloc de données cible dans les m blocs de données à l'aide de la troisième trame étendue.

10. Procédé selon l'une quelconque des revendications 7 à 9, dans lequel, avant la réception, par le premier nœud de réseau, de n groupes de premières informations d'attribut envoyées par le point de terminaison expéditeur à l'aide d'une première trame étendue, le procédé comprend également :
l'envoi, par le premier nœud de réseau, d'un paquet de négociation au point de terminaison expéditeur, dans lequel le paquet de négociation transporte un identifiant cible, l'identifiant cible indique que le protocole QUIC du premier nœud de réseau fournit un support de trame étendue, et une trame étendue comprend au moins l'une quelconque de la première trame étendue, de la deuxième trame étendue ou de la troisième trame étendue.

11. Procédé selon l'une quelconque des revendications 8 à 10, dans lequel les secondes informations d'attribut comprennent au moins l'une quelconque des informations d'attribut suivantes :
une priorité d'un bloc de données, un niveau de fiabilité d'un bloc de données et une date limite d'un bloc de données, dans lequel
la priorité du bloc de données représente l'importance du bloc de données ;
le niveau de fiabilité du bloc de données représente l'intégrité du bloc de données lorsque le bloc de données est reçu par un nœud homologue ; et
la date limite du bloc de données représente la durée de transmission autorisée lorsque le bloc de données est transmis d'un nœud à un autre nœud.

12. Procédé selon l'une quelconque des revendications 7 à 11, dans lequel les premières informations d'attribut comprennent au moins l'une quelconque des informations d'attribut suivantes :
une priorité d'un flux, un niveau de fiabilité d'un flux et une date limite d'un bloc de données dans un flux, dans lequel
la priorité du flux représente l'importance du flux ;
le niveau de fiabilité du flux représente l'intégrité du flux lorsque le flux est reçu par un nœud homologue ; et
la date limite du bloc de données dans le flux représente la durée de transmission autorisée lorsque le bloc de données dans le flux est transmis d'un nœud à un autre nœud.

13. Dispositif informatique comprenant un processeur et une mémoire, dans lequel le processeur est couplé à la mémoire ;
la mémoire est configurée pour stocker un programme ; et
le processeur est configuré pour exécuter le programme dans la mémoire afin de permettre au dispositif informatique de réaliser le procédé selon l'une quelconque des revendications 1 à 12.

14. Support de stockage lisible par ordinateur, comprenant un programme, dans lequel, lorsque le programme fonctionne sur un ordinateur, l'ordinateur est activé pour réaliser le procédé selon l'une quelconque des revendications 1 à 12.

15. Produit de programme informatique comprenant des instructions, dans lequel lorsque le produit de programme informatique fonctionne sur un ordinateur, l'ordinateur est activé pour réaliser le procédé selon l'une quelconque des revendications 1 à 12.
